# EUROPÄISCHE PATENTSCHRIFT

(11) **EP 0 490 262 B1**
(45) Veröffentlichungstag und Bekanntmachung des Hinweises auf die Patenterteilung: **26.04.1995**
(21) Anmeldenummer: 91120855.1
(22) Anmeldetag: 04.12.1991
(51) Int. Cl.: F16F 9/46

(54) **Absperrventileinrichtung**
Check valve
Soupape d'arrêt

(30) Priorität: 08.12.1990 DE 4039219; 02.05.1991 DE 4114305
(43) Veröffentlichungstag der Anmeldung: 17.06.1992
(73) Patentinhaber: Fichtel & Sachs AG, D-97419 Schweinfurt (DE)
(72) Erfinder: Geiling, Wolfgang, W-8724 Schonungen-Hausen (DE); Wirth, Alfred, W-8720 Schweinfurt (DE)
(74) Vertreter: Weickmann, Heinrich, Dipl.-Ing.

(56) Entgegenhaltungen:
- EP-A- 0 263 346
- WO-A-91/10077
- FR-A- 2 578 617

## Beschreibung

Die Erfindung betrifft eine Absperrventileinrichtung zwischen zwei Teilstrecken einer Fluidenverbindung, welche zwei Fluidenkammern eines Schwingungsdämpfers miteinander verbindet, wobei die Absperrventileinrichtung mit mindestens einem, eine Hochdruckteilstrecke und eine Niederdruckteilstrecke trennenden Absperrventil und dieses mit einem Absperrventilkörper ausgebildet ist und wobei der Absperrventilkörper durch eine äußere Steuerung zwischen einer Absperrstellung und einer Öffnungsstellung verstellbar ist.

Solche Absperrventileinrichtungen werden in Schwingungsdämpfern in einer sogenannten Bypass-Leitung verwendet, welche zwei Fluidenkammern des Schwingungsdämpfers miteinander verbindet. Dabei ist die Bypass-Leitung durch das Absperrventil in die Niederdruckteilstrecke und die Hochdruckteilstrecke unterteilt. Beispielsweise sieht man eine solche Bypass-Leitung bei Zweirohr-Schwingungsdämpfern zwischen der von der Kolbenstange durchsetzten Fluidenkammer und dem Ausgleichsraum vor. In diesem Falle findet bei Öffnung des Absperrventils eine Durchströmung der Bypass-Leitung stets in der gleichen Richtung von der die Kolbenstange aufnehmenden Fluidenkammer zu dem Ausgleichsraum hin statt, unabhängig davon, in welcher Richtung sich die Kolbenstange relativ zu dem Zylinder bewegt. Durch das Absperren bzw. Öffnen des Absperrventils kann die Charakteristik des Schwingungsdämpfers verändert werden. Ist das Absperrventil in der Bypass-Leitung geöffnet, so ist die Bypass-Leitung im wesentlichen parallel zu der Kolbenventilanordnung geschaltet und das Dämpfungsverhalten des Schwingungsdämpfers ist verhältnismäßig weich. Ist das Absperrventil geschlossen, so ist die Dämpfungscharakteristik des Schwingungsdämpfers im wesentlichen durch die Dämpfventilanordnung des Kolbens bestimmt und das Dämpfverhalten des Schwingungsdämpfers ist verhältnismäßig hart.

Ein Schwingungsdämpfer mit einer Absperrventileinrichtung der eingangs bezeichneten Bauart ist beispielsweise aus der DE-PS 34 34 877 bekannt.

Es wurde nun festgestellt, daß bei einem Schwingungsdämpfer mit Bypass-Leitung zwischen zwei Fluidenkammern und einer der Veränderung des Dämpfungsverhaltens dienenden Absperrventileinrichtung in dieser Bypass-Leitung dann störende Geräusche auftreten können, wenn beim Öffnen des Absperrventils in der auf höherem Druckniveau befindlichen Fluidenkammer und damit in der Hochdruckteilstrecke der Bypass-Leitung ein überhöhter Momentandruck vorliegt. Der Erfindung liegt deshalb die Aufgabe zugrunde, eine Absperrventileinrichtung der eingangs bezeichneten Bauart so auszubilden, daß die Öffnung des Absperrventils in einem Zeitpunkt eintritt, in dem der Druck in der Hochdruckteilstrecke unterhalb eines vorbestimmten Werts liegt.

Zur Lösung dieser Aufgabe wird bei einem Absperrventil der eingangs bezeichneten Bauart vorgeschlagen, daß das Absperrventil durch die äußere Steuerung in einen Öffnungsbereitschaftszustand überführbar ist und daß das Absperrventil nach seiner Überführung in den Öffnungsbereitschaftszustand in Abhängigkeit von dem in der Hochdruckteilstrecke herrschenden Druck öffenbar ist, wenn der Druck einen vorbestimmten Wert unterschreitet. Da bei einem Schwingungsdämpfer in Verlauf der periodischen Schwingungen der Kolbenstange gegenüber dem Zylinder der Druck in den Fluidenkammern periodisch und damit kurzfristig wechselt, ist damit zu rechnen, daß nach Überführung des Absperrventilkörpers in den Öffnungsbereitschaftszustand innerhalb kürzester Zeit diejenige Druckbedingung auftritt, die Voraussetzung dafür ist, um in gewünschter Weise die Öffnung des Absperrventils herbeizuführen. Da der Druck in der Hochdruckteilstrecke dann unterhalb des vorbestimmten Drucks liegt, ist keine zu Geräuschen führende Druckentspannung zu erwarten.

Der Erfindungsgedanke läßt sich anwenden, gleichgültig, ob der Absperrventilkörper unmittelbar durch die äußere Steuerung verstellbar ist, wie dies beispielsweise in der DE-PS 34 34 877 der Fall ist, oder ob durch die äußere Steuerung ein Vorsteuerventil betätigt wird, das seinerseits den Druck in einer den Absperrventilkörper beaufschlagenden Steuerkammer beeinflußt.

Darüber hinaus kann die erfindungsgemäß ausgebildete Absperrventileinrichtung sowohl bei Einrohr-Schwingungsdämpfern als auch bei Zweirohr-Schwingungsdämpfern eingesetzt werden.

Bevorzugt ist die erfindungsgemäße Absperrventileinrichtung nach dem Prinzip der Vorsteuerung in der Weise ausgebildet, daß eine erste von der Hochdruckteilstrecke beaufschlagte Seite des Absperrventilkörpers gegen einen Absperrventilsitz elastisch andrückbar ist, daß weiter eine von dieser ersten Seite abgelegene zweite Seite des Absperrventilkörpers an eine Steuerkammer angrenzend von dem Fluidendruck in dieser Steuerkammer beaufschlagbar ist, daß weiter die Steuerkammer über eine den Absperrventilkörper überbrückende Drosselstrecke an die Hochdruckteilstrecke angeschlossen ist, daß weiter die Steuerkammer über einen Steuerkammerabfluß mit der Niederdruckteilstrecke in Verbindung steht, daß dieser Steuerkammerabfluß durch die äußere Steuerung in einen Abflußbereitschaftszustand überführbar ist und daß der Steuerkammerabfluß in dem Abflußbereitschaftszustand in Abhängigkeit von dem in der Hochdruckteilstrecke herrschenden Druck öffenbar ist, wenn der Druck in der Hochdruckteilstrecke den vorbestimmten Wert unterschreitet.

Dabei kann in dem Steuerkammerabfluß ein Steuerkammerabflußventil mit einem Steuerkammerabflußventilsitz und einem in Richtung auf die Abflußstellung elastisch vorgespannten Steuerkammerabflußventilkörper vorgesehen sein, welcher durch den in der Steuerkammer herrschenden Druck und durch eine von der äußeren Steuerung abhängige Zusatzschließkraft in Richtung auf eine Schließstellung beaufschlagbar ist, wobei der Abflußbereitschaftszustand durch Ausschalten der von der äußeren Steuerung abhängigen Zusatzschließkraft herstellbar ist. Beispielsweise kann auf den Steuerkammerabflußventilkörper ein Magnetanker einwirken, welcher die Zusatzschließkraft auf den Steuerkammerabflußventilkörper überträgt, etwa in der Weise, daß der Magnetanker durch eine Magnetanker-Vorspannfeder im Sinne der Erzeugung der Zusatzschließkraft belastet ist und daß zur Aufhebung der Zusatzschließkraft eine Magnetspule des Magnetankers unter Strom gesetzt wird.

In einer ersten Ausführungsform der Erfindung ist vorgesehen, daß der Steuerkammerabflußventilkörper von einer Tellerfeder gebildet ist, welche durch innere Vorspannung in Richtung auf Öffnung des Steuerkammerabflusses vorgespannt und gleichzeitig dem in der Steuerkammer herrschenden Druck und der Wirkung des Magnetankers ausgesetzt ist.

Hierbei kann die Tellerfeder mit einem ersten Umfangsrand auf einer Stützschulter einer Zwischenkörperbaugruppe aufliegen und mit einem zweiten Umfangsrand gegen den Steuerkammerabflußventilsitz andrückbar sein. Alternativ kann die Tellerfeder auch mit dem ersten Umfangsrand an der Zwischenkörperbaugruppe eingespannt sein. Bevorzugt wird aber die Ausführungsform, bei der die Tellerfeder an der Stützschulter anliegt, weil bei dieser Ausführungsform geringere Materialbeanspruchungen auftreten.

Um mit geringen, von außen eingeleiteten Steuerkräften kurze Schaltzeiten zu erreichen, wird vorgeschlagen, daß der Steuerkammerabflußkörper an einer Zwischenkörperbaugruppe angebracht ist, welche durch den Druck in der Steuerkammer dichtend gegen den Absperrventilkörper andrückbar ist und bei Druckabbau in der Steuerkammer von dem Absperrventilkörper abhebbar ist unter Bildung eines zusätzlichen Steuerkammerabflusses aus der Steuerkammer.

Dabei kann die Zwischenkörperbaugruppe in einem Teil eines Absperrventilgehäuses dichtend geführt sein. Bevorzugt sieht man allerdings vor, daß die Zwischenkörperbaugruppe in einem Magnetanker dichtend geführt ist. Diese Ausführungsform hat den Vorteil, daß das Magnetfeld der den Magnetanker beaufschlagenden Spule in geringerem Maße der Gefahr einer Störung durch ferritische Bauteile, wie etwa die Tellerfeder, ausgesetzt ist.

Die Zwischenkörperbaugruppe kann aus einem den Steuerkammerabflußventilkörper tragenden Trägerteil und einem kugelgelenkig mit dem Trägerteil in Eingriff stehenden Zusatzabflußventilkörper gebildet sein, welcher zusammen mit einem an dem Absperrventilkörper ausgebildeten Zusatzabflußventilsitz den zusätzlichen Steuerkammerabfluß der Steuerkammer bildet. Dabei hat der kugelgelenkige Eingriff zwischen dem Trägerteil und dem Zusatzabflußventilkörper den Vorteil, daß die Dichtheit des zusätzlichen Steuerkammerabflusses durch Fluchtungsfehler bei der Bearbeitung weniger beeinträchtigt wird.

In einer zweiten Ausführungsform der Erfindung ist vorgesehen, daß der Steuerkammerabflußventilsitz an einem Zusatzabflußventilkörper ausgebildet ist, welcher zusammen mit einem an dem Absperrventilkörper ausgebildeten Zusatzabflußventilsitz einen zusätzlichen Steuerkammerabfluß der Steuerkammer bildet und daß zwischen dem Steuerkanmerabflußventilkörper und dem Zusatzabflußventilkörper eine Schraubendurckfeder angeordnet ist, welche den Steuerkammerabflußventilkörper in Richtung des Abhebens von dem Steuerkammerabflußventilsitz des Zusatzabflußventilkörpers vorspannt. Diese Ausführungsform hat den Vorteil verringerter Materialbeanspruchungen.

Dabei kann der Steuerkammerabflußventilkörper in einer Ventilkörperführung eines Absperrventilgehäuses dichtend geführt sein. Es ist jedoch bevorzugt, daß der Steuerkammerabflußventilkörper in einer Ventilkörperführung eines Magnetankers dichtend geführt ist. Dies hat den Vorteil, daß das Magnetfeld der den Magnetanker beaufschlagenden Spule in geringerem Maße der Gefahr einer Störung durch ferritische Bauteile ausgesetzt ist. Zusätzlich wird vorgeschlagen, daß der Steuerkammerabflußventilkörper und der Zusatzabflußventilkörper im Bereich des Steuerkammerabflußventilsitzes kugelgelenkig aneinander anliegen. Hierdurch können Fluchtungsfehler bei der Bearbeitung in einfacher Weise ausgeglichen werden, so daß die Dichtheit des zusätzlichen Steuerkammerabflußventils gewährleistet werden kann.

In einer weiteren Ausführungsform der Erfindung ist vorgesehen, daß der Steuerkammerabflußventilsitz an dem Absperrventilkörper ausgebildet ist und daß zwischen dem Steuerkammerabflußventilkörper und dem Absperrventilkörper eine Schraubendruckfeder vorgesehen ist, welche den Steuerkammerabflußventilkörper in Richtung des Abhebens von dem Steuerkammerabflußventilsitz des Absperrventilkörpers vorspannt. Bei dieser Ausführungsform ist die Zahl der Bauteile reduziert, wodurch eine einfachere Fertigung der Absperrventileinrichtung ermöglicht ist.

In Weiterbildung dieser Ausführungsform wird vorgeschlagen, daß der Steuerkammerabflußventilkörper taumelfähig oder kugelgelenkig in einer Ventilkörperführung eines Absperrventilgehäuses oder eines Magnetankers dichtend geführt ist. Hierbei ist die Führung des Steuerkammerabflußventilkörpers in einer Ventilkörperführung eines Magnetankers wegen einer verminderten Störanfälligkeit der Absperrventileinrichtung gegen Störungen durch ferritische Teile bevorzugt. Durch die taumelfähige oder kugelgelenkige Führung können Fluchtungsfehler bei der Bearbeitung ausgeglichen werden.

Die beiliegenden Figuren erläutern die Erfindung an Hand von Ausführungsbeispielen; es stellen dar:
- Fig. 1: einen Schwingungsdämpfer mit Bypass und Absperrventil im Bypass;
- Fig. 2: eine schematische Darstellung zur Erläuterung der Wirkungsweise der erfindungsgemäßen Absperrventileinrichtung;
- Fig. 3 - 6: ein erstes Ausführungsbeispiel der Absperrventileinrichtung bei verschiedenen Steuersignalen und Druckbedingungen;
- Fig. 7: ein zweites Ausführungsbeispiel der Absperrventileinrichtung in Absperrstellung; und
- Fig. 8 - 12: weitere Ausführungsbeispiele der Absperrventileinrichtung.

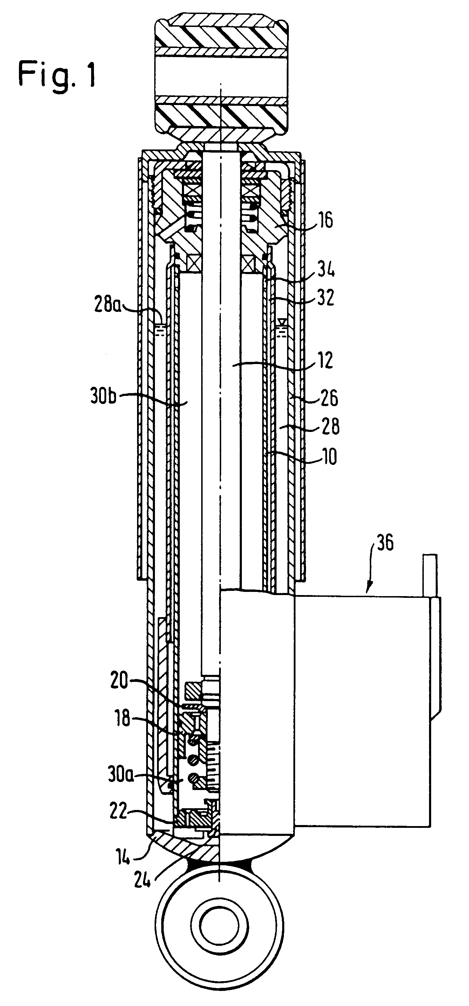

In Fig. 1 ist der Zylinder eines Schwingungsdämpfers mit 10 bezeichnet, die Kolbenstange mit 12. Der Zylinder ist nach unten durch einen Boden 14 abgeschlossen. Die Kolbenstange 12 ist durch eine Führungs- und Dichtungseinheit 16 aus dem oberen Ende des Zylinders herausgeführt. Innerhalb des Zylinders 10 ist an der Kolbenstange 12 eine Kolbeneinheit 18 mit einer Kolbenventilanordnung 20 befestigt. Das untere Ende des Zylinders ist durch eine Bodenplatte 22 mit einer Bodenventilanordnung 24 abgeschlossen. Der Zylinder 10 ist von einem Behälterrohr 26 umhüllt. Zwischen dem Behälterrohr 26 und dem Zylinder 10 ist ein Ringraum 28 gebildet, der eine Ausgleichskammer darstellt. Der Raum innerhalb des Zylinders 10 ist durch die Kolbeneinheit 18 in eine erste Arbeitskammer 30a und eine zweite Arbeitskammer 30b unterteilt. Die Arbeitskammern 30a und 30b sind mit Druckflüssigkeit gefüllt. Die Ausgleichskammer 28 ist bis zu dem Niveau 28a mit Flüssigkeit und darüber mit Gas gefüllt. Innerhalb der Ausgleichskammer 28 ist eine erste Leitungsstrecke, nämlich eine Hochdruckteilstrecke 32, gebildet, welche über eine Bohrung 34 des Zylinders mit der zweiten Arbeitskammer 30b in Verbindung steht. An diese Hochdruckteilstrecke schließt sich eine seitlich an dem Behälterrohr 26 angebaute Absperrventileinrichtung 36 an. Von dieser führt (nicht dargestellt) eine zweite Leitungsstrecke, nämlich eine Niederdruckteilstrecke, zu dem Ausgleichsraum 28.

Wenn die Kolbenstange 12 aus dem Zylinder 10 nach oben ausfährt, wird die obere Arbeitskammer 30b verkleinert. Es bildet sich in der oberen Arbeitskammer 30b ein Überdruck aus, der sich durch die Kolbenventilanordnung 20 in die untere Arbeitskammer 30a abbauen kann, solange die Absperrventileinrichtung 36 geschlossen ist. Wenn die Absperrventileinrichtung 36 geöffnet ist, so fließt gleichzeitig Flüssigkeit von der oberen Arbeitskammer 30b durch die Hochdruckteilstrecke 32 und die Absperrventileinrichtung 36 in die Ausgleichskammer 28. Die Dämpfcharakteristik des Schwingungsdämpfers beim Ausfahren der Kolbenstange ist also davon abhängig, ob die Absperrventileinrichtung 36 offen oder geschlossen ist.

Wenn die Kolbenstange 12 in den Zylinder 10 einfährt, so bildet sich in der unteren Arbeitskammer 30a ein Überdruck. Flüssigkeit kann von der unteren Arbeitskammer 30a durch die Kolbenventilanordnung 20 nach oben in die obere Arbeitskammer 30b übergehen. Die durch das zunehmende Kolbenstangenvolumen innerhalb des Zylinders verdrängte Flüssigkeit wird durch die Bodenventilanordnung 24 in die Ausgleichskammer 28 ausgetrieben. In der oberen Arbeitskammer 30b tritt, da der Durchflußwiderstand der Kolbenventilanordnung 20 geringer ist als der Durchflußwiderstand der Bodenventilanordnung 24, ebenfalls ein steigender Druck auf. Dieser steigende Druck kann bei geöffneter Absperrventileinrichtung 36 durch die Hochdruckteilstrecke 32 wiederum in den Ausgleichsraum 28 überfließen. Dies bedeutet, daß bei geöffneter Absperrventileinrichtung 36 der Stoßdämpfer auch beim Einfahren dann eine weichere Charakteristik hat, wenn die Absperrventileinrichtung 36 geöffnet ist und eine härtere Charakteristik, wenn die Absperrventileinrichtung geschlossen ist, genauso wie beim Ausfahren der Kolbenstange. Festzuhalten ist, daß die Strömungsrichtung durch die Hochdruckteilstrecke 32 des Bypasses immer die gleiche ist, gleichgültig, ob die Kolbenstange ein- oder ausfährt.

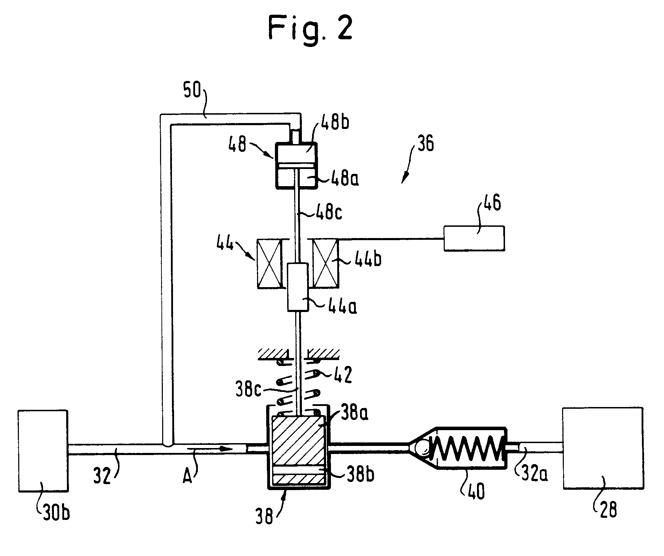

Die in Fig. 2 schematisch dargestellte Absperrventileinrichtung 36 liegt in einem Bypass zwischen dem oberen Arbeitsraum 30b und der Ausgleichskammer 28 und besteht im wesentlichen aus einem Absperrventil 38 und einem druckabhängig öffnenden Ventil 40, welche in Durchflußrichtung A in Reihe geschaltet sind. Dabei ist das druckabhängig öffnende Ventil 40 aufgrund seiner Gestaltung und der Federkraft für die Charakteristik des Schwingungsdämpfers mit verantwortlich, wenn das Absperrventil 38 geöffnet ist. Das Absperrventil 38 umfaßt einen Kolben 38a, welcher mit einer Bohrung 38b versehen ist und zwischen einer Durchlaßstellung und einer Sperrstellung (s. Fig. 2) verstellbar ist. Der Kolben 38a ist von einer Druckfeder 42 in seine Sperrstellung vorgespannt. Ferner ist der Kolben 38a über eine Kolbenstange 38c mit einem Magnetanker 44a eines Elektromagneten 44 verbunden. Ein Magnetwicklungen 44b des Elektromagneten 44 durchfließender Strom kann in Abhängigkeit von Signalen, welche von einer äußeren Signalquelle 46 herrühren, an- bzw. abgeschaltet werden. Bei angeschaltetem Strom wird in den Wicklungen 44b ein Magnetfeld erzeugt, welches den Anker 44a in dem Sinne beeinflußt, daß der Anker 44a auf den mit ihm über die Kolbenstange 38c verbundenen Kolben 38a eine in Richtung auf seine Durchlaßstellung hin gerichtete Kraft ausübt. Auf der der Kolbenstange 38c gegenüberliegenden Seite des Magnetankers 44a ist eine Kolbenstange 48c einer Hydraulikeinrichtung 48 angebracht. Die Hydraulikeinrichtung 48 umfaßt einen Kolben 48a, welcher von dem Druck in einem in Fig. 2 oberhalb des Kolbens 48a dargestellten Raum 48b beaufschlagt ist. Der obere Raum 48b der Hydraulikeinrichtung 48 ist über eine Nebenleitung 50 mit der Hochdruckteilstrecke 32 verbunden. Der in dem oberen Raum 48b gegen den Kolben 48a anstehende Druck übt über die Kolbenstangen 48c und 38c sowie den Magnetanker 44a auf den Kolben 38a eine Kraft in dem Sinne aus, daß dieser in seine Sperrstellung übergeführt wird.

Bei nicht bestromter Magnetspule 44b wirken auf den Kolben 38a die Federkraft der Druckfeder 42 und die vom Druck im oberen Raum 48b der Hydraulikeinrichtung 48 herrührende Hydraulikkraft ein. Beide Kräfte wirken in Richtung auf die Sperrstellung des Kolbens 38a. Wird die Magnetspule 44b nun in Folge eines äußeren Signals bestromt, so wirkt diesen beiden Kräften die über den Anker 44a und die Kolbenstange 38c auf den Kolben 38a übertragene Magnetkraft entgegen. Ist der in der Hochdruckteilstrecke 32 und somit auch im oberen Raum 48b anstehende Druck P größer als ein vorbestimmter Grenzdruck P_{G}, so ist die Summe der Beträge der hieraus resultierenden Hydraulikkraft und der von der Feder 42 herrührenden Federkraft größer als der Betrag der Magnetkraft. Dementsprechend resultiert eine in Richtung auf die Sperrstellung des Kolbens 38a hin gerichtete Gesamtkraft. Unterschreitet der in der Hochdruckteilstrecke 32 anstehende Druck P den vorbestimmten Grenzwert P_{G}, so resultiert hieraus eine entsprechend geringere Hydraulikkraft. Die Summe der Beträge der Hydraulikkraft und der Federkraft ist nunmehr geringer als die Magnetkraft, so daß sich eine Gesamtkraft ergibt, welche den Kolben 38a aus seiner Sperrstellung in seine Durchlaßstellung überführt. Es ist dafür gesorgt, daß nach einmal erfolgter Öffnung des Absperrventils dieses solange offen bleibt als die Spule 44b bestromt wird, auch wenn der Druck in der Hochdruckteilstrecke 32 wieder ansteigt und damit die von der Hydraulikeinrichtung 48 ausgeübte Hydraulikkraft wieder ansteigt. Dies kann beispielsweise dadurch erreicht werden, daß durch entsprechende Gestaltung der Spule 44b und des Magnetankers 44a die Magnetkraft in der Öffnungsstellung des Absperrventils (d.h. wenn der Magnetanker 44a vollständig in die Spule 44b eingefahren ist) größer ist als in der in Fig. 2 gezeigten Absperrstellung, und zwar so groß, daß bei allen in der Hochdruckteilstrecke 32 zu erwartenden Drücken das Absperrventil in der Öffnungsstellung bleibt, solange nur die Spule 44b bestromt ist. Wird schließlich der das Magnetfeld des Elektromagneten hervorrufende Strom wieder abgeschaltet, so hat man wiederum lediglich die von der Feder 42 herrührende Federkraft und die von dem Druck im oberen Raum 48b der Hydraulikeinrichtung 48 herrührende Hydraulikkraft, welche unabhängig vom Wert des anstehenden Drucks P zusammenwirken, um den Kolben 38a in seine Sperrstellung überzuführen. Durch eine entsprechende Dimensionierung der Hydraulikeinrichtung 48, des Elektromagneten 44 und der Druckfeder 42 kann ein gewünschter Grenzdruck P_{G} vorbestimmt werden.

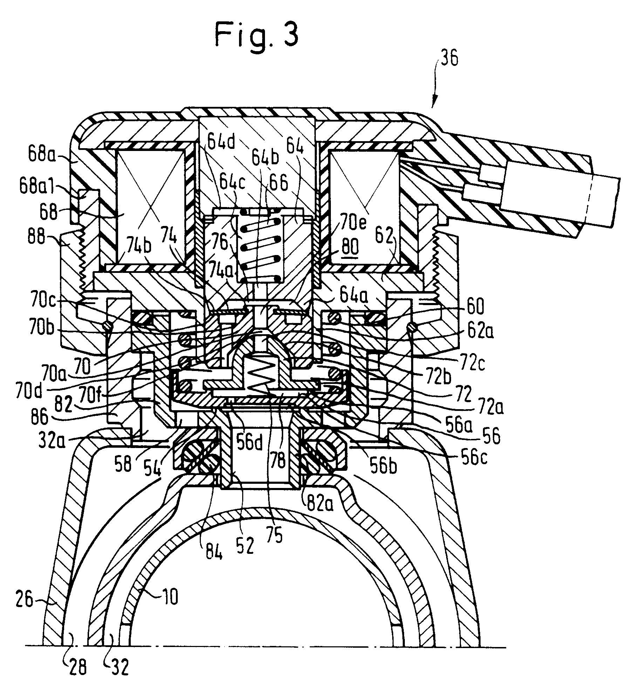

In den Fig. 3 - 6 erkennt man im Schnitt den Zylinder 10, die Hochdruckteilstrecke 32 des Bypasses und den Ausgleichsraum 28. An die Hochdruckteilstrecke 32 schließt sich ein Zentralkanal 52 an, welcher der Absperrventileinrichtung 36 angehört. In dem oberen Ende des Zentralkanals 52 ist ein Absperrventilsitz 54 ausgebildet. Auf dem Absperrventilsitz 54 liegt als Absperrventilkörper eine starre Absperrventilplatte 56 auf. In den Fig. 3 - 6 befindet sich die Absperrventilplatte in ihrer Absperrstellung, die Verbindung zwischen dem Zentralkanal 52 und dem Ausgleichsraum 28 über Bohrungen 58 ist im wesentlichen geschlossen. Die Absperrventilplatte 56 ist durch eine Schraubendruckfeder 60 in Richtung auf den Absperrventilsitz 54 hin vorgespannt, die an einer Platte 62 abgestützt ist.

In der Absperrventileinrichtung 36 ist ein Magnetanker 64 konzentrisch zu dem Zentralkanal 52 angeordnet. Dieser Magnetanker ist durch eine Magnetanker-Vorspannfeder 66 in den Fig. 3 - 6 nach unten in Richtung auf die Absperrventilplatte 56 vorgespannt und kann durch eine Magnetwicklung 68 nach oben gezogen werden, wenn diese Magnetwicklung 68 mit Strom beschickt wird. Zwischen dem Magnetanker 64 und der Absperrventilplatte 56 ist eine Zwischenkörperbaugruppe 70,72 angeordnet. Die Zwischenkörperbaugruppe umfaßt ein Trägerteil 70 und einen in den Fig. 3 - 6 unterhalb des Trägerteils angeordneten Zusatzabflußventilkörper 72, welcher in einer Ausnehmung 70a des Trägerteils 70 aufgenommen ist und glockenförmige Gestalt besitzt. Das Trägerteil 70 trägt eine Tellerfeder 74, welche mit einem inneren Umfangsrand 74a in eine am Trägerteil ausgebildete Ringnut 70b eingespannt ist und mit einem äußeren Umfangsrand 74b durch eine am Magnetanker 64 ausgebildete Ringrippe 64a an einen am Trägerteil ausgebildeten Steuerkammerabflußventilsitz 70c andrückbar ist, um Steuerkammerabflußbohrungen 70f im Trägerteil 70 zu verschließen. Die den Steuerkammerabflußventilkörper 74 bildende Tellerfeder ist durch ihre innere Vorspannung in Richtung auf die Öffnung des Steuerkammerabflusses hin elastisch vorgespannt, d.h. im Sinne eines Abhebens von dem Steuerkammerabflußventilsitz 70c. Der Zusatzabflußventilkörper 72 liegt im Zustand gemäß Fig. 3 - 5 mit einem Randflansch 72a auf einer Ringrippe 56a der Absperrventilplatte 56 auf und bildet mit dieser ein zusätzliches Abflußventil. Eine Druckfeder 75 spannt das Zusatzabflußventil 72a,56a in Richtung auf dessen Öffnung hin vor. Weiter liegt der Zusatzabflußventilkörper 72 in einer Ringzone 72b mit einer sphärischen Fläche im wesentlichen dicht an einem Konus 70d der Ausnehmung 70a an. Der Eingriff der Ringzone 72b und des Konus 70d wird durch die Kraft der Feder 75 unterstützt. Eine Bohrung 72c des Zusatzabflußventilkörpers durchsetzt dessen Scheitelbereich und schließt an eine Durchbohrung 70e des Trägerteils 70 an, welche in einen im wesentlichen scheibenförmig ausgebildeten Raum 76 mündet. Der Raum 76 ist einerseits vom Magnetanker 64 und andererseits vom Steuerkammerabflußventilkörper 74 und dem Trägerteil 70 begrenzt. Eine Durchbohrung 64b des Magnetankers 64 verbindet eine die Magnetanker-Vorspannfeder 66 aufnehmende Federkammer 64c mit dem Raum 76. Ein zwischen dem Zusatzabflußventilkörper 72 und der Absperrventilplatte 56 ausgebildeter Raum 78, die Durchbohrungen 72c des Zusatzabflußventilkörpers 72 und 70e des Trägerteils 70, der scheibenförmige Raum 76, die Durchbohrung 64b des Magnetankers 64, die Federkammer 64c und der oberhalb des Magnetankers befindliche Raum 64d bilden zusammen eine Steuerkammer 80.

Die Unterseite der Absperrventilplatte 56 ist mit 56b, die Oberseite mit 56c bezeichnet. Die Absperrventilplatte 56 ist im Zustand gemäß Fig. 3 von unten her dem Druck P in dem Zentralkanal 52, d.h. dem Druck in der oberen Arbeitskammer 30b gemäß Fig. 1 und der Hochdruckteilstrecke 32 ausgesetzt. Bei geschlossenem Steuerkammerabflußventil 74,70c ist die Oberseite 56c dem Druck in der Steuerkammer 80 ausgesetzt. Der Druck in dem Zentralkanal 52 wird an die Steuerkammer 80 über eine Drosselbohrung 56d vermittelt, welche die Absperrventilplatte 56 durchsetzt. Der in der Steuerkammer 80 herrschende Druck beaufschlagt den Steuerkammerabflußventilkörper 74 in Richtung auf die Schließung des Steuerkammerabflußventils 74,70c. Dabei ist der Druck in der Steuerkammer 80 im wesentlichen gleich dem Druck im Zentralkanal 52, da das Steuerkammerabflußventil 74,70, das Zusatzabflußventil 72a,56a und auch die Abflußmöglichkeit zwischen der sphärischen Fläche 72b und dem Konus 70d abgeschlossen sind.

Die Absperrventilplatte 56 ist in einem topfförmigen Einsatz 82 untergebracht, welcher die Bohrung 58 aufweist und nach unten einen Rohrstutzen 82a aufweist. Dieser Rohrstutzen bildet den Zentralkanal 52 und ist durch eine Dichtung 84 an die erste Teilstrecke 32 des Bypasses dicht angeschlossen. Der Topf 82 ist in einen Rohrstutzen 86 eingesetzt, welcher mit dem Behälter 26 verschweißt ist. Der Zwischenraum zwischen dem Topf 82 und dem Rohrstutzen 86 bildet eine Niederdruckteilstrecke 32a des Bypasses. Die Hochdruckteilstrecke 32 und die Niederdruckteilstrecke 32a bilden zusammen den Bypass. Auf den Topf 82 ist die Zwischenplatte 62 aufgesetzt, welche zusammen mit den der Magnetwicklung 68 zugehörigen Eisenteilen und Gehäuseteilen eine Baueinheit bilden kann.

Es ist auch möglich, sämtliche Teile der Magnetventilbaugruppe nacheinander an dem Rohrstutzen 86 anzubringen und letztlich den Rohrstutzen 86 durch eine Überwurfmutter 88 mit dem Magnetwicklungsgehäuse 68 oder einem Gewindeeinsatz 68a1 des Magnetwicklungsgehäuses zu verbinden.

Es sei nun angenommen, daß die Magnetwicklung 68 nicht stromdurchflossen ist, so daß der Magnetanker 64 gemäß Fig. 3 unter der Wirkung der Magnetanker-Vorspannfeder 66 nach unten gegen den Steuerkammerabflußventilkörper 74 und somit das Trägerteil 70 vorgespannt ist, das Trägerteil 70 auf der Ringzone 72b, der Zusatzabflußventilkörper 72 auf der Ringrippe 56a und die Absperrventilplatte 56 auf dem Ventilsitz 54 aufliegt. Das Steuerkammerabflußventil 74,70c ist in dieser Stellung geschlossen, so daß in der Steuerkammer 80 im wesentlichen der gleiche Druck herrscht wie in der Hochdruckteilstrecke 32. Auch das Absperrventil 56,54 befindet sich gemäß Fig. 3 in seiner Absperrstellung: Erstens weist die dem Druck in der Steuerkammer 80 ausgesetzte Oberseite 56c des Absperrventilkörpers 56 eine größere Fläche auf als die dem Druck in dem Zentralkanal 52 ausgesetzte Unterseite 56b, woraus eine Kraft resultiert, welche in Richtung auf die Absperrstellung des Absperrventils 56,54 hin wirkt; zweitens ist die Kraft, welche die Schraubendruckfeder 60 auf den Absperrventilkörper 56 ausübt, in Richtung auf die Absperrstellung des Absperrventils hin gerichtet und drittens wird die Kraft der Magnetanker-Vorspannfeder 66, wie vorstehend beschrieben, über die Zwischenkörperbaugruppe 70,72 auf den Absperrventilkörper 56 übertragen und wirkt auf ein Schließen des Absperrventils hin. Selbstverständlich sind bei der in Fig. 3 dargestellten Anordnung Leckströme nicht auszuschließen. Gleichwohl kann davon ausgegangen werden, daß bei entsprechend großer Bemessung der Drosselbohrung 56d der Druck in der Steuerkammer 80 in der in Fig. 3 dargestellten Stellung immer annähernd gleich dem Druck in dem Zentralkanal 52 ist. Dabei ist auch nicht auszuschließen, daß beispielsweise in dem Steuerkammerabflußventilkörper 74 ein Voröffnungsdurchlaß vorgesehen ist, der ständig einen definierten Voröffnungsstrom zuläßt, wobei dann die Drosselbohrung 56d entsprechend größer bemessen wird, um in der Steuerkammer 80 einen für das Schließen des Absperrventils 54,56 ausreichenden Druck aufrechtzuerhalten.

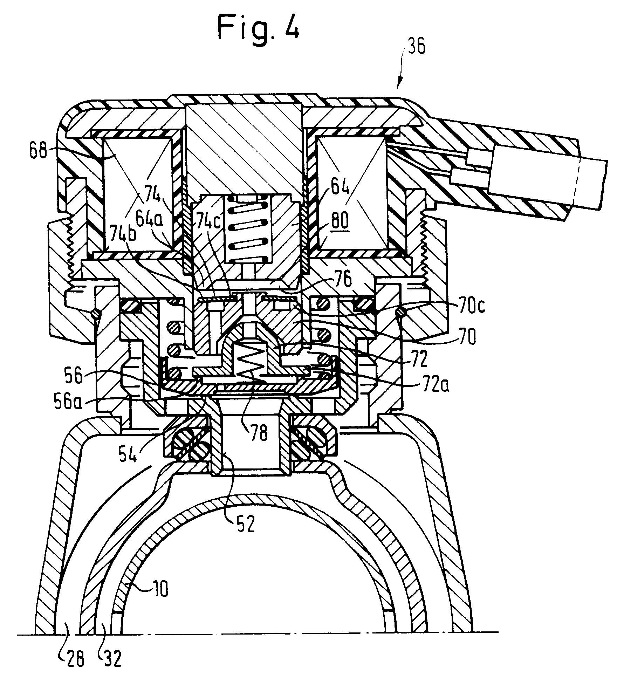

Wird die Magnetwicklung 68 erregt, so wird gemäß Fig. 4 der Magnetanker 64 angezogen, so daß der äußere Rand 74b des Steuerkammerabflußventilkörpers 74 nicht mehr im Eingriff mit der Ringrippe 64a des Magnetankers steht. Ist die von dem in der Steuerkammer 80 herrschenden Druck P auf die Oberseite 74c des Steuerkammerabflußventilkörpers 74 ausgeübte Kraft größer als die elastische innere Vorspannkraft der Tellerfeder 74, so bleibt das Steuerkammerabflußventil 74,70c weiterhin geschlossen; es befindet sich in seinem Abflußbereitschaftszustand. Da die Zwischenkörperbaugruppe 70,72 und die Tellerfeder 74 zusammen dem in der Steuerkammer 80 herrschenden Druck im Bereich des Scheibenraums 76 eine größere Beaufschlagungsfläche bieten als im Bereich des Raumes 78, werden einerseits das Trägerteil 70 und der Zusatzabflußventilkörper 72 sicher zusammengehalten und andererseits die Zwischenkörperbaugruppe 70,72 sicher mit dem Randflansch 72a des Zusatzabflußventilkörpers 72 auf der Ringrippe 56a des Absperrventilkörpers 56 gehalten. Aus der Steuerkammer 80 kann somit noch keine Flüssigkeit in Richtung zur Niederdruckseite, d.h. zur Ausgleichskammer 28, entweichen. Der Druck in der Steuerkammer 80 bleibt somit in der Stellung gemäß Fig. 4 weiterhin im wesentlichen der gleiche wie der in der Hochdruckteilstrecke 32 bzw. im Zentralkanal 52. Das Absperrventil 56,54 bleibt auch nach Wegfall der von der Magnetanker-Vorspannfeder 64 herrührenden Kraft aus den im Zusammenhang mit Fig. 3 näher erläuterteten Gründen weiterhin geschlossen.

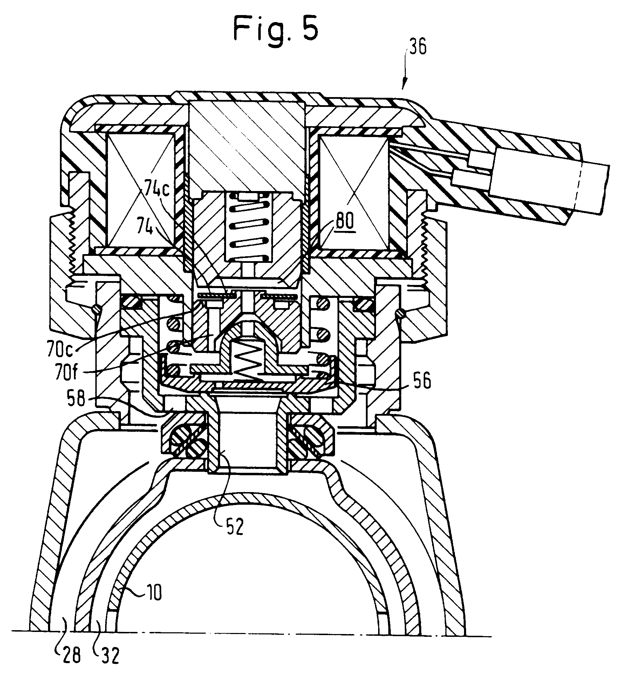

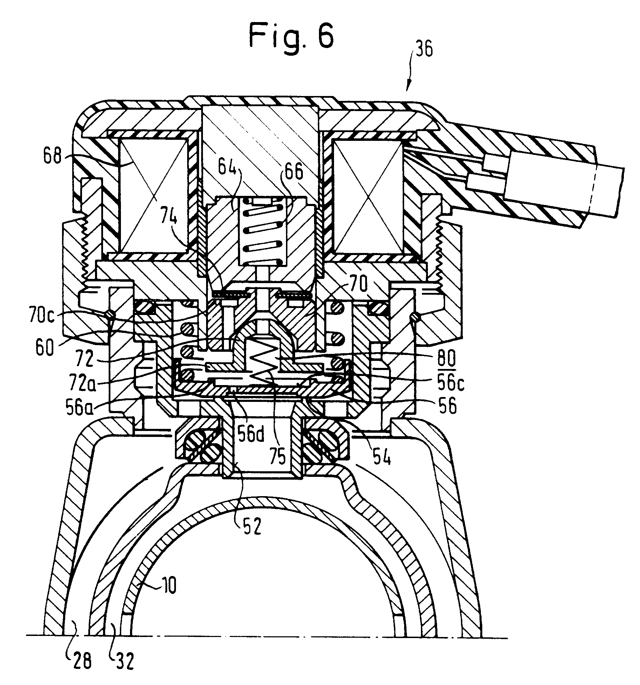

Sinkt der im Zentralkanal 52 und somit in der Steuerkammer 80 herrschende Druck P bei weiterhin stromdurchflossener Magnetwicklung 68 unter einen Grenzdruck P_{G}, so ist die von dem Druck P auf die Oberseite 74c des Steuerkammerabflußventilkörpers 74 ausgeübte Kraft kleiner als die elastische innere Vorspannkraft der Tellerfeder 74. Die Tellerfeder 74 kann sich nunmehr entspannen, so daß das Steuerkammerabflußventil 74,70c gemäß Fig. 5 geöffnet wird. Nunmehr kann die Dämpfungsflüssigkeit aus der Steuerkammer 80 durch die Steuerkammerabflußbohrungen 70f und die Bohrungen 58 in die Ausgleichskammer 28 entweichen. Hierdurch bricht der Druck in der Steuerkammer 80 zusammen. Die Zwischenkörperbaugruppe 70,72 wird gemäß Fig. 6 durch die Kraft der Feder 75 vom Absperrventilkörper 56 abgehoben, so daß auch das Zusatzabflußventil 72a,56a geöffnet wird und zwischen dem Randflansch 72a des Zusatzabflußventilkörpers 72 und der Ringrippe 56a des Absperrventilkörpers eine zusätzliche Abflußmöglichkeit für Dämpfungsflüssigkeit aus der Steuerkammer 80 in Richtung zur Ausgleichskammer 28 geschaffen wird.

In der Stellung gemäß Fig. 6 wirkt das Absperrventil 56,54 als ein normales druckabhängiges Ventil mit einer Drosselbohrung 56d, durch welche ein geringer Flüssigkeitsstrom vom Zentralkanal 52 in den Ausgleichsraum 28 strömen kann. Bei steigendem Flüssigkeitsangebot in dem Zentralkanal 52, d.h. bei schneller werdendem Hub des Kolbens 12 gegen den Zylinder 10 (Fig. 1), hebt dann die Absperrventilplatte 56 von dem Ventilsitz 54 gegen die Kraft der Feder 60 zunehmend ab. Der Hauptstrom fließt hierbei zwischen dem Ventilsitz 54 und der Absperrventilplatte 56 hindurch, während ein kleiner Teilstrom durch die Drosselbohrung 56d und die Steuerkammer 80 zum Ausgleichsraum 28 strömt.

Es soll bemerkt werden, daß, wenn das Steuerkammerabflußventil 74,70c erst einmal geöffnet ist und die Zwischenkörperbaugruppe 70,72 von der Absperrventilplatte 56 abgehoben ist, der im Zentralkanal 52 gegen die Absperrventilplatte 56 anstehende Druck P den Grenzdruck P_{G} ohne weiteres auch wieder übersteigen kann, ohne daß das Steuerkammerabflußventil wieder geschlossen wird oder die Zwischenkörperbaugruppe 70,72 wieder zur Anlage an die Ringrippe 56a gelangt.

Wird von der äußeren Signalquelle ein Schließbefehl erteilt und infolge dessen die Magnetspule 68 nicht mehr von Strom durchflossen, so schließt der Magnetanker 64 infolge der Kraft der Magnetanker-Vorspannfeder 66 das Steuerkammerabflußventil 74,70c und drückt die Zwischenkörperbaugruppe 70,72 wieder gegen die Ringrippe 56a des Absperrventilkörpers 56, wodurch auch der zusätzliche Steuerkammerabfluß zwischen dem Randflansch 72a und der Ringrippe 56a geschlossen wird. Es baut sich in der Steuerkammer 80 erneut Druck auf, der die Oberseite 56c der Absperrventilplatte 56 beaufschlagt. Die hieraus resultierende Kraft wirkt mit der Kraft der Druckfedern 60 und 66 zusammen, um die Absperrventilplatte 56 gegen den Staudruck der Dämpfungsflüssigkeit in dem Zentralkanal 52 wieder gegen den Ventilsitz 54 zu drücken. Die Absperrventileinrichtung 36 befindet sich nunmehr wieder in ihrer Stellung gemäß Fig. 3.

Nachzutragen ist, daß die Zwischenkörperbaugruppe 70,72 auch einstückig ausgebildet werden kann. Der Vorteil einer zweiteiligen Ausbildung mit kugelgelenkiger Verbindung der beiden Teile ist jedoch, daß gegebenenfalls vorhandene Fluchtungsfehler in einfacher Weise ausgeglichen werden können.

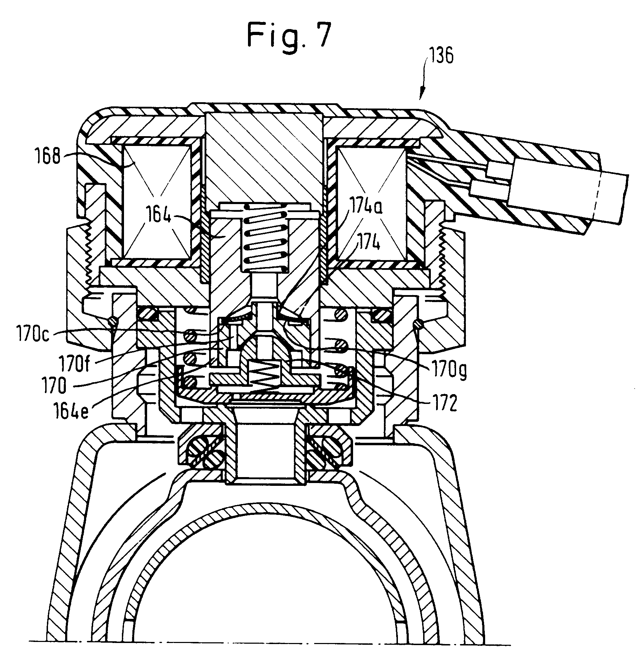

In Fig. 7 ist ein zweites Ausführungsbeispiel der Absperrventileinrichtung dargestellt. Analoge Teile sind mit gleichen Bezugszeichen versehen wie in den Fig. 3 - 6, jeweils vermehrt um die Zahl 100. Die Absperrventileinrichtung 136 unterscheidet sich von der vorstehend beschriebenen Absperrventileinrichtung 36 zum einen dadurch, daß das Trägerteil 170 nunmehr in einem am unteren Ende des Magnetankers 164 ausgebildeten rohrförmigen Ansatz 164e geführt ist. Dies hat den Vorteil, daß das den Magnetanker 164 durchsetzende Magnetfeld der Spule 168 in geringerem Umfang durch ferritische Bauteile, wie beispielsweise die Tellerfeder 174, gestört wird. Zum anderen liegt die Tellerfeder 174 in der in Fig. 7 dargestellten Ausführungsform mit ihrem inneren Umfangsrand 174a lose auf einer Stützschulter 170g des Trägerteils 170 auf, was den Vorteil geringerer Materialbeanspruchungen hat. Ansonsten entspricht die Absperrventileinrichtung 136 in ihrem Aufbau und in ihrer Funktion der in den Fig. 3 - 6 dargestellten Absperrventileinrichtung 36.

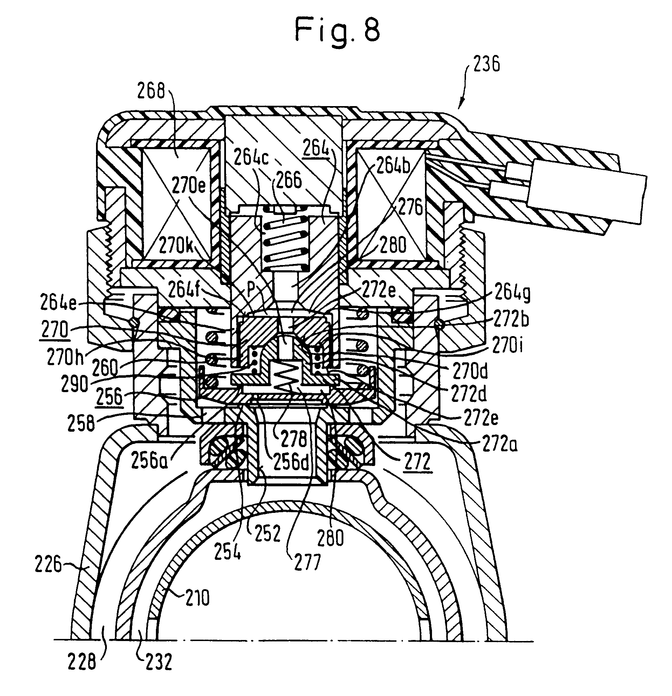

In Fig. 8 ist ein weiteres Ausführungsbeispiel der Absperrventileinrichtung dargestellt. Analoge Teile sind mit gleichen Bezugszeichen versehen wie in den Fig. 3 - 6, jedoch vermehrt um die Zahl 200. Das Ausführungsbeispiel gemäß Fig. 8 wird im folgenden nur insoweit beschrieben werden als es sich von den vorstehend beschriebenen Ausführungsbeispielen unterscheidet.

In diesem Ausführungsbeispiel hat das Trägerteil 270 die Funktion eines Steuerkammerabflußventilkörpers. Der Steuerkammerabflußventilkörper 270 liegt in der in Fig. 8 dargestellten Absperrstellung mit seinem Konus 270d auf einer den Steuerkammerabflußventilsitz bildenden Ringzone 272b des Zusatzabflußventilkörpers 272 auf. Der Steuerkammerabflußventilkörper 270 und der Zusatzabflußventilkörper 272 bilden zusammen eine Zwischenkörperbaugruppe 270,272. Eine Schraubendruckfeder 290 spannt den Steuerkammerabflußventilkörper 270 in Richtung des Abhebens vom Steuerkammerabflußsitz 272b vor. Die Feder 290 ist zwischen einem in Fig. 8 nach unten abstehenden Ringflansch 270h des Steuerkammerabflußventilkörpers 270 und dem glockenförmig ausgebildeten Hauptteil 272d des Zusatzabflußventilkörpers 272 angeordnet und stützt sich einenends an der Oberseite 272e des Randflansches 272a des Zusatzabflußventilkörpers 272 und anderenends an einem am Steuerkammerabflußventilkörper 270 ausgebildeten Ringsteg 270i ab. Der Steuerkammerabflußventilkörper 270 ist in einem rohrförmigen Ansatz 264e des Magnetankers 264 dichtend geführt. Infolge der von der Magnetankervorspannfeder 266 herrührenden Zusatzschließkraft liegt der Magnetanker 264 in der in Fig. 8 dargestellten Absperrstellung des Steuerkammerabflußventils 270,272b mit einer Schulter 264f am Steuerkammerabflußventilkörper 270 an und hält diesen entgegen der Kraft der Feder 290 in seiner Absperrstellung. Der in der Steuerkammer 280 herrschende Druck wird über in der Fingschulter 264f des Magnetankers 264 ausgebildete Kanäle 264g im wesentlichen an die gesamte Rückseite 270k des Steuerkammerabflußventilkörpers 270 weitergegeben. Da der Steuerkammerabflußventilkörper 270 dem Druck P in der Steuerkammer 280 im Bereich des Raumes 276 eine größere Beaufschlagungsfläche bietet als der Zusatzabflußventilkörper 272 im Bereich des Raumes 277, übt der Druck P in der Steuerkammer 280 auf die Zwischenkörperbaugruppe 270,272 eine in Fig. 8 nach unten gerichtete hydraulische Schließkraft aus.

Wird die Magnetwicklung 268 infolge eines Öffnungsbefehls von der äußeren Signalquelle mit Strom beschickt und infolge dessen der Magnetanker 264 vom Steuerkammerabflußventilkörper 270 abgehoben, so verbleibt der Steuerkammerabflußventilkörper 270 dann weiterhin in seiner Absperrstellung, wenn der in der Steuerkammer 280 herrschende Druck P größer ist als ein vorbestimmter Grenzwert P_{G} des Drucks, da die vom Druck P auf die Rückseite 270k des Steuerkammerabflußventilkörpers 270 ausgeübte hydraulische Schließkraft größer ist als die von der Feder 290 auf den Steuerkammerabflußventilkörper 270 ausgeübte Öffnungskraft. Unterschreitet der Druck P in der Steuerkammer 280 den Grenzwert P_{G} infolge Kleinerwerdens des Drucks im Zentralkanal 252, so wird der Steuerkammerabflußventilkörper 270 aufgrund der nun überwiegenden Federkraft der Feder 290 vom Steuerkammerabflußventilsitz 272b abgehoben. Nunmehr kann Dämpfungsflüssigkeit zwischen Steuerkammerabflußventilkörper 270 und Steuerkammerabflußventilsitz 272b hindurch zum Ausgleichsraum 228 hin fließen. Hierdurch bricht der auf die Rückseite 270k einwirkende Druck P soweit zusammen, daß der Steuerkammerabflußventilkörper 270 infolge der Kraft der Feder 290 vollständig vom Steuerkammerabflußventilsitz 272b abgehoben und die Bohrung 270e vollständig freigegeben wird. Bei hohen Durchflußraten wird durch den an der Bohrung 270e auftretenden Druckabfall eine in Richtung auf die Öffnung des Zusatzabflußventils 272,256a hin gerichtete Kraft auf den Zusatzabflußventilkörper 272 erzeugt. Ist diese Kraft größer als die von der Feder 290 auf den Zusatzabflußventilkörper 272 ausgeübte Kraft, so öffnet das Zusatzabflußventil 272,256a. Das Absperrventil 256,254 wirkt nunmehr in Verbindung mit der Feder 260 als ein normales federbelastetes Dämpfungsventil mit Voröffnungsdurchlaß 256d. Die vom Druckabfall an der Bohrung 270e erzeugte Kraft kann gegebenenfalls durch eine im Raum 277 angeordnete Feder 278 unterstützt werden.

Wird die Magnetwicklung 268 infolge eines von der äußeren Signalquelle gegebenen Schließbefehls nicht mehr von Strom durchflossen, so wird der Magnetanker 264 durch die Kraft der Feder 266 wieder in Eingriff mit dem Steuerkammerabflußventilkörper 270 gebracht. Die Feder 290 überträgt die hierdurch auf den Steuerkammerabflußventilkörper 270 ausgeübte Kraft auf den Zusatzabflußventilkörper 272 und drückt diesen gegen den Zusatzabflußventilsitz 256a an der Absperrventilplatte 256, wodurch das Zusatzabflußventil 272,256a geschlossen wird. Da die Kraft der Feder 266 größer ist als die Kraft der Feder 290, wird die Feder 290 in der Folge komprimiert, bis der Steuerkammerabflußventilkörper 270 wieder auf dem Steuerkammerabflußventilsitz 272b aufliegt, wodurch auch das Steuerkammerabflußventil 270,272b geschlossen wird. Nunmehr kann sich in der Steuerkammer 280 Druck aufbauen, welcher die von Steuerkammerabflußventilkörper 270 und Zusatzabflußventilkörper 272 gebildete Zwischenkörperbaugruppe 270,272 beaufschlagt und, wie vorstehend erläutert wurde, auf diese eine in Fig. 8 nach unten gerichtete Kraft ausübt. Diese Kraft wirkt mit der Kraft der Federn 260 und 266 zusammen, um die Absperrventilplatte 256 gegen den Staudruck der Dämpfungsflüssigkeit im Zentralkanal 252 wieder gegen den Ventilsitz 254 zu drücken, so daß das Absperrventil 256,254 wieder geschlossen wird.

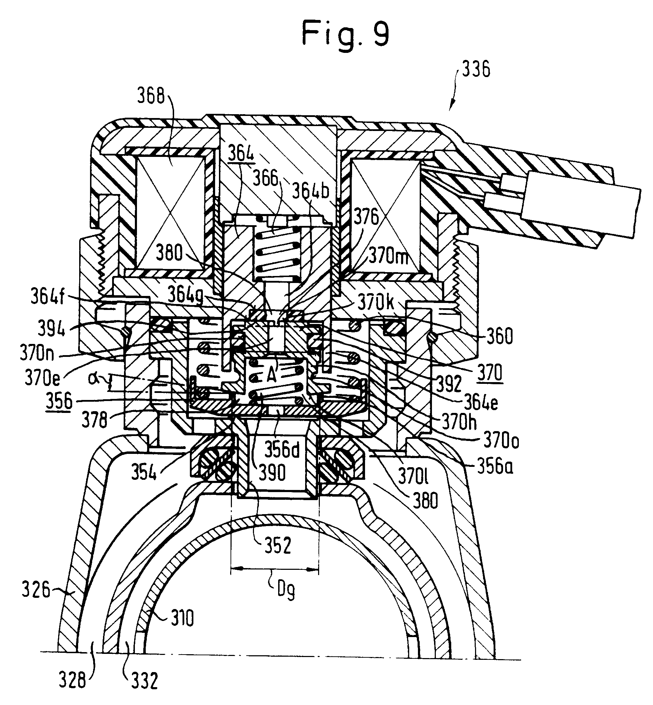

In Fig. 9 ist ein weiteres Ausführungsbeipiel der Absperrventileinrichtung dargestellt, wobei analoge Teile mit gleichen Bezugszeichen versehen sind wie in den Fig. 3 - 6, jedoch vermehrt um die Zahl 300. Auch diese Ausführungsform wird im folgenden nur insoweit beschrieben werden, als sie sich von den vorstehend beschriebenen Ausführungsbeispielen unterscheidet.

Bei dem in Fig. 9 dargestellten Ausführungsbeispiel ist auf den Einsatz eines Zusatzabflußventilkörpers verzichtet. Die am Absperrventilkörper 356 ausgebildete Ringrippe 356a bildet den Steuerkammerabflußventilsitz, auf welchem der Steuerkammerabflußventilkörper 370 mit der Unterseite 370l des Ringflansches 370h ruht. Im Innenraum des Ringflansches 370h ist eine Feder 390 angeordnet, welche den Steuerkammerabflußventilkörper 370 in Richtung des Abhebens vom Steuerkammerabflußventilsitz 356a hin vorspannt. In der in Fig. 9 dargestellten Stellung liegt der Magnetanker 364 infolge der Zusatzschließkraft der Magnetankervorspannfeder 366 mit einer Schulter 364f auf dem Steuerkammerabflußventilkörper 370 auf und hält diesen entgegen der Kraft der Feder 390 auf dem Steuerkammerabflußventilsitz 356a, d.h. in der Absperrstellung des Steuerkammerabflußventils 370,356a. Eine an der Rückseite 370k des Steuerkammerabflußventilkörpers 370 ausgebildete Kreuznut 370m stellt sicher, daß auch bei Anlage des Magnetankers 364 am Steuerkammerabflußventilkörper 370 im wesentlichen die gesamte Rückseite 370k des Steuerkammerabflußventilkörpers 370 von dem in der Steuerkammer 380 herrschenden Druck P beaufschlagt ist. Da der Steuerkammer abflußventilkörper 370 dem Druck P in der Steuerkammer 380 im Bereich des Raumes 376 eine größere Beaufschlagungsfläche bietet als im Bereich des Raumes 378, übt der Druck P in der Steuerkammer 380 auf den Steuerkammerabflußventilkörper 370 eine in Fig. 9 nach unten gerichtete hydraulische Schließkraft aus.

Wird die Magnetwicklung 368 bestromt, so wird der Magnetanker 364 gegen die Kraft der Feder 366 vom Steuerkammerabflußventilkörper 370 abgehoben. Ist der Wert des Drucks P in der Steuerkammer 380 größer als der vorbestimmte Grenzwert P_{G} des Drucks, so verbleibt das Steuerkammerabflußventil 370,356a weiter in seiner in Fig. 9 dargestellten Schließstellung, da die vom Druck P in der Steuerkammer 380 auf den Steuerkammerabflußventilkörper 370 ausgeübte hydraulische Schließkraft in diesem Fall größer ist als die von der Feder 390 auf den Steuerkammerabflußventilkörper 370 ausgeübte Öffnungskraft. Sinkt der Druck P in der Steuerkammer 380 infolge Kleinerwerdens des Drucks im Zentralkanal 352 unter den vorbestimmten Grenzwert P_{G}, so wird der Steuerkammerabflußventilkörper 370 durch die nun überwiegende Öffnungskraft der Feder 390 vom Steuerkammerabflußventilsitz 356a abgehoben. Nunmehr kann Dämpfungsflüssigkeit zwischen Steuerkammerabflußventilsitz 356a und Steuerkammerabflußventilkörper 370 hindurch zum Ausgleichsraum 328 fließen. Das Absperrventil 356,354 wirkt in Verbindung mit den Federn 360 und 390 als ein normales federbelastetes Dämpfungsventil mit Voröffnungsdurchlaß 356d.

Wird der die Magnetwicklung 368 durchfließende Strom infolge eines von der äußeren Signalquelle gegebenen Schließbefehls abgeschaltet, so wird der Magnetanker 364 durch die Kraft der Feder 366 wieder in Eingriff mit dem Steuerkammerabflußventilkörper 370 gebracht und drückt diesen entgegen der Kraft der Feder 390 gegen den Steuerkammerabflußventilsitz 356a, wodurch das Steuerkammerabflußventil 370,356a geschlossen wird. In der Folge baut sich in der Steuerkammer 380 Druck auf, welcher den Steuerkammerabflußventilkörper 370 beaufschlagt und auf diesen, wie vorstehend erläutert wurde, eine in Fig. 9 nach unten gerichtete Kraft ausübt. Diese Kraft wirkt mit der Kraft der Federn 360 und 366 zusammen, um die Absperrventilplatte 356 gegen den Staudruck der Dämpfungsflüssigkeit im Zentralkanal 352 wieder gegen den Ventilsitz 354 zu drücken, so daß das Absperrventil 356,354 wieder geschlossen wird.
Um auch bei dem Ausführungsbeispiel gemäß Fig. 9 einen Ausgleich für etwaige vorhandene Fluchtungsfehler gewährleisten zu können, ist der Steuerkammerabflußventilkörper 370 in dem rohrförmigen Ansatz 364e des Magnetankers 364 taumelfähig geführt. Hierzu ist es notwendig, daß der Außendurchmesser A des Steuerkammerabflußventilkörpers 370 deutlich kleiner ist als der Innendurchmesser des Rohransatzes 364e des Magnetankers 364. Damit dennoch eine dichtende Führung sichergestellt werden kann, d.h. daß keine Dämpfungsflüssigkeit zwischen Rohransatz 364e und Außenumfang des Steuerkammerabflußventilkörpers 370 hindurch aus der Steuerkammer 380 entweichen kann, ist in einer am Außenumfang des Steuerkammerabflußventilkörpers 370 vorgesehenen Ringnut 370n ein Dichtungselement 392 angeordnet. Ein in einer Ausnehmung 364g des Magnetankers 364 angeordnetes Ringelement 394, welches aus einem elastischen Material gebildet ist, sorgt dafür, daß auch bei leichten Verkippungen des Steuerkammerabflußventilkörpers 370 relativ zum Magnetanker 364 die Zusatzschließkraft zuverlässig vom Magnetanker 364 auf den Steuerkammerabflußventilkörper 370 übertragen werden kann. Um die Dichtheit des Steuerkammerabflußventils 370,356a auch bei Verkippungen des Steuerkammerabflußventilkörpers 370 sicherzustellen, ist die Unterseite 370l des Ringflansches 370h des Steuerkammerabflußventilkörpers 370 leicht konisch ausgebildet. Der Konuswinkel α kann beispielsweise etwa 8° betragen. Eine im Querschnitt halbkreisförmige Ringausnehmung 370o, welche im Ringflansch 370h des Steuerkammerabflußventilkörpers 370 ausgebildet ist, verbessert die Elastizität des Ringflansches 370h.

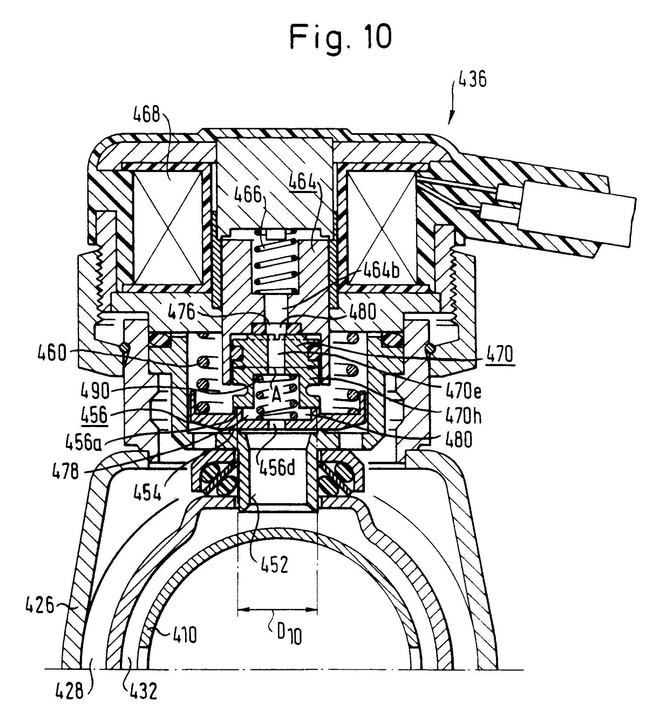

In Fig. 10 ist ein weiteres Ausführungsbeispiel der Absperrventileinrichtung dargestellt, wobei analoge Teile mit gleichen Bezugszeichen versehen sind wie in den Fig. 3 - 6, jedoch vermehrt um die Zahl 400. Das Ausführungsbeispiel gemäß Fig. 10 entspricht im wesentlichen dem in Fig. 9 dargestellten Ausführungsbeispiel und wird daher im folgenden nur insofern beschrieben als es sich von diesem unterscheidet.

In dem in Fig. 10 dargestellten Ausführungsbeispiel weist der am Absperrventilkörper 456 ausgebildete Steuerkammerabflußventilsitz 456a einen Durchmesser D₁₀ auf, welcher kleiner ist als der Durchmesser D₉ des Steuerkammerabflußventilsitzes 356a des in Fig. 9 dargestellten Ausführungsbeispiels. In den beiden genannten Ausführungsbeispielen weist der Steuerkammerabflußventilkörper 370 bzw. 470 jeweils den gleichen Außendurchmesser A auf, so daß bei dem Ausführungsbeispiel gemäß Fig. 10 das Verhältnis der vom Druck in der Steuerkammer 480 auf den Steuerkammerabflußventilkörper 470 ausgeübte und in Richtung auf die Absperrstellung des Steuerkammerabflußventils 470,456a hin gerichtete Kraft zu der vom Druck in der Steuerkammer 480 auf den Steuerkammerabflußventilkörper 470 ausgeübten und in Richtung auf die Öffnungsstellung des Steuerkammerabflußventils 470,456a hin gerichteten Kraft deutlich größer ist als das Verhältnis der entsprechenden auf den Steuerkammerabflußventilkörper 370 ausgeübten, hydraulischen Kräfte beim Ausführungsbeispiel gemäß Fig. 9. Als Folge der gegenüber Fig. 9 geänderten Dimensionierung ergibt sich also, daß das Steuerkammerabflußventil 470,456a erst bei noch geringeren Drücken im Zentralkanal 452 öffnet. Darüber hinaus weist der Ringflansch 470h des Steuerkammerabflußventilkörpers 470 eine größere Wandstärke auf als der Ringflansch 370h des Ausführungsbeispiels gemäß Fig. 9.

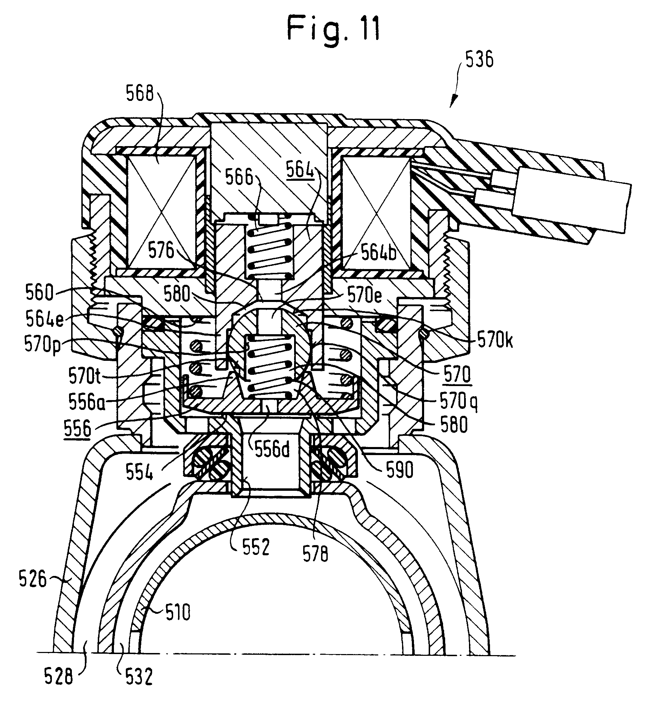

In Fig. 11 ist ein weiteres Ausführungsbeispiel der Absperrventileinrichtung dargestellt. Analoge Teile sind mit gleichen Bezugszeichen versehen wie in den Fig. 3 - 6, jedoch vermehrt um die Zahl 500. Dieses Ausführungsbeispiel wird im folgenden nur insoweit beschrieben werden als es sich in Aufbau und Funktion von den vorstehend beschriebenen Ausführungsbeispielen unterscheidet.

In dem Ausführungsbeispiel gemäß Fig. 11 ist der Steuerkammerabflußventilkörper 570 kugelförmig ausgebildet mit einer Federkammer 570p, in welcher die Feder 590 geführt ist, und einer zur Rückseite 570k des Steuerkammerabflußventilkörpers 570 führenden Durchbohrung 570e. Der Steuerkammerabflußventilsitz ist in dem in Fig. 11 dargestellten Ausführungsbeispiel von einer im Querschnitt trapezförmig ausgebildeten und am Absperrventilkörper 556 angeordneten Ringrippe 556a gebildet, welche in der Absperrstellung des Steuerkammerabflußventils 570,556a am Steuerkammerabflußventilkörper 570 in einer Ringlinie anliegt. Durch eine in der linken Hälfte der Fig. 11 bei 570t schematisch und übertrieben dargestellte, an die Kugel 570 angearbeitete Planfläche kann das Steuerkammerabflußventil 570,556a auch mit einer Flächendichtung ausgebildet sein. Der Steuerkammerabflußventilkörper 570 ist in dem Rohransatz 564e des Magnetankers 564 im Bereich einer Ringlinie 570q dichtend geführt.

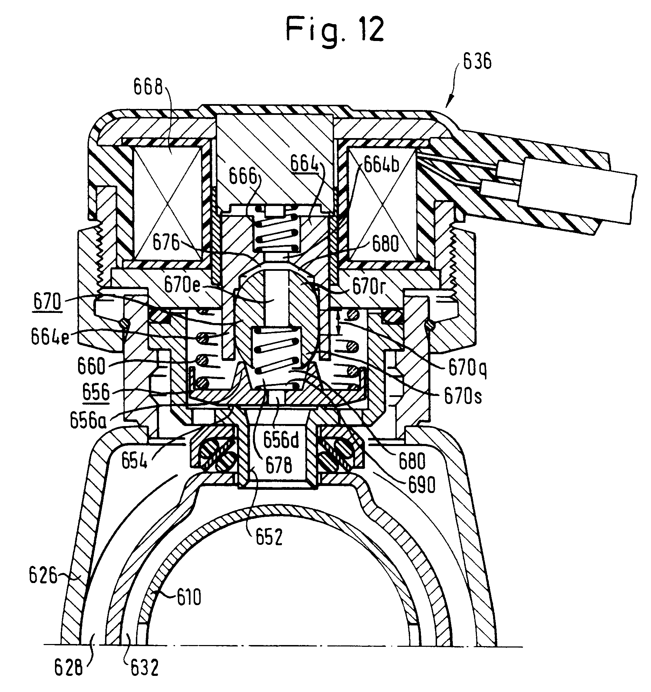

In Fig. 12 ist ein weiteres Ausführungsbeispiel der Absperrventileinrichtung dargestellt, bei welchem analoge Teile mit gleichen Bezugszeichen versehen sind wie in den Fig. 3 - 6, jedoch vermehrt um die Zahl 600.

Das in Fig. 12 dargestellte Ausführungsbeispiel unterscheidet sich von dem in Fig. 11 dargestellten Ausführungsbeispiel lediglich dadurch, daß der Steuerkammerabflußventilkörper 670 zylinderförmig ausgebildet ist mit an den Enden des Zylinders ausgeformten Kugelkalotten 670r und 670s. Hierdurch ist der Steuerkammerabflußventilkörper 670 in dem Rohransatz 664e des Magnetankers 664 im Bereich der Ringfläche 670q dichtend geführt. Bei dieser Ausführungsform besteht eine gewisse Unabhängigkeit der Qualität des Steuerkammerabflußventils 670,656a von Fluchtungsfehlern des Magnetankers 664 und des Abflußventilkörpers 656 dank der sphärischen Gestalt des unteren Endes 670s des Steuerkammerabflußventilkörpers 670.

Abschließend soll noch auf wesentliche Unterschiede der in Fig. 2 schematisch dargestellten Absperrventileinrichtung und den in den Fig. 3 - 12 dargestellten Ausführungsbeispiele eingegangen werden. Zum einen umfaßt die Absperrventileinrichtung aus Fig. 2 ein Absperrventil 38 und ein damit in Reihe geschaltetes, federbelastetes Dämpfventil 40, während das in den Fig. 3 - 12 dargestellte Absperrventil 56,54 in Verbindung mit der Druckfeder 60 auch die Funktion eines federbelasteten Ventils ausübt. Weiter steht bei der in Fig. 2 dargestellten Absperrventileinrichtung der Magnetanker 44a zu jedem Zeitpunkt in fester Verbindung mit dem Kolben 38a des Absperrventils 38 und dem Kolben 48a der Hydraulikeinrichtung 48, während der Magnetanker 64 bzw. 164 in den Ausführungsbeispielen gemäß den Fig. 3 - 12 lediglich in der in den Fig. 3 bzw. 7 - 12 dargestellten Schließstellung auf den Steuerkammerabflußventilkörper und den Absperrventilkörper einwirkt. Für beide Ausführungsformen gilt aber, daß der Absperrventilkörper durch die Bestromung der Magnetspule jeweils nur in eine Öffnungsbereitschaftsstellung gebracht wird und daß die tatsächliche Öffnung erst dann eintritt, wenn der Druck in der Hochdruckteilstrecke unter einen vorbestimmten Wert P_{G} abgefallen ist, so daß keine schlagartige Öffnung des Absperrventils mit entsprechender Geräuschentwicklung erfolgen kann.

Dieses grundsätzliche Verhalten läßt sich wie folgt darstellen: 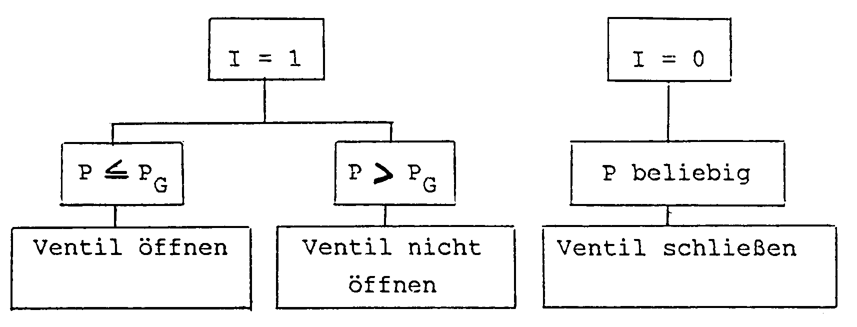
Dabei bedeutet:
- I = 1: Anlegen eines Steuersignals, d.h. z.B. Bestromen einer Magnetspule;
- I = 0: Fehlen eines solchen Steuersignals, d.h. z.B. Magnetspule stromlos;
- P: Tatsächlicher Druck in der Hochdruckteilstrecke;
und
- P_{G}: Grenzdruck, bei dem das Absperrventil öffnen soll.

Das Diagramm besagt einerseits, daß eine Öffnung des Absperrventils nur dann eintreten kann, wenn zum einen ein äußeres Steuersignal vorliegt und zum anderen der Druck P kleiner gleich dem Grenzdruck P_{G} ist und andererseits, daß bei Nichtvorliegen eines Steuersignals das Absperrventil geschlossen ist, unabhängig davon, wie groß der tatsächliche Druck ist. Die tatsächlichen Drücke in der Hochdruckteilstrecke können z.B. von 0 - 100 bar gehen. Der Grenzdruck kann beispielsweise durch entsprechende Gestaltung der Absperrventileinrichtung auf 1 bar festgelegt werden.

## Patentansprüche

1. Absperrventileinrichtung (36) zwischen zwei Teilstrecken (32,32a) einer Fluidenverbindung, welche zwei Fluidenkammern (30b,28) eines Schwingungsdämpfers (10) miteinander verbindet, wobei die Absperrventileinrichtung (36) mit mindestens einem eine Hochdruckteilstrecke (32) und eine Niederdruckteilstrecke (32a) trennenden Absperrventil (56,54) und dieses mit einem Absperrventilkörper (56) ausgebildet ist und wobei der Absperrventilkörper (56) durch eine äußere Steuerung zwischen einer Absperrstellung und einer Öffnungsstellung verstellbar ist, **dadurch gekennzeichnet, daß** das Absperrventil (56,54) durch die äußere Steuerung in einen Öffnungsbereitschaftszustand überführbar ist und daß das Absperrventil (56,54) nach seiner Überführung in den Öffnungsbereitschaftszustand in Abhängigkeit von dem in der Hochdruckteilstrecke (32) herrschenden Druck öffenbar ist, wenn der Druck (P) einen vorbestimmten Wert (P_{G}) unterschritten hat.

2. Absperrventileinrichtung (36) nach Anspruch 1, **dadurch gekennzeichnet, daß** eine von der Hochdruckteilstrecke (32) abgelegene Seite (56c) des Absperrventilkörpers (56) an eine Steuerkammer (80) angrenzend von dem Fluidendruck in dieser Steuerkammer (80) beaufschlagbar ist, daß weiter die Steuerkammer (80) über eine den Absperrventilkörper (56) überbrückende Drosselstrecke (56d) an die Hochdruckteilstrecke (32) angeschlossen ist, daß weiter die Steuerkammer (80) über einen Steuerkammerabfluß (70f) mit der Niederdruckteilstrecke (32a) in Verbindung steht, daß dieser Steuerkammerabfluß (70f) durch die äußere Steuerung in einen Abflußbereitschaftszustand überführbar ist und daß der Steuerkammerabfluß (70f) in dem Abflußbereitschaftszustand in Abhängigkeit von dem in der Hochdruckteilstrecke (32) herrschenden Druck öffenbar ist, wenn der Druck in der Hochdruckteilstrecke (32) einen vorbestimmten Wert unterschritten hat.

3. Absperrventileinrichtung (36) nach Anspruch 1, **dadurch gekennzeichnet, daß** eine erste von der Hochdruckteilstrecke (32) beaufschlagte Seite (56b) des Absperrventilkörpers (56) gegen einen Absperrventilsitz (54) elastisch andrückbar ist, daß weiter eine von dieser ersten Seite abgelegene zweite Seite (56c) des Absperrventilkörpers (56) an eine Steuerkammer (80) angrenzend von dem Fluidendruck in dieser Steuerkammer (80) beaufschlagbar ist, daß weiter die Steuerkammer (80) über eine den Absperrventilkörper (56) überbrückende Drosselstrecke (56d) an die Hochdruckteilstrecke (32) angeschlossen ist, daß weiter die Steuerkammer (80) über einen Steuerkammerabfluß (70f) mit der Niederdruckteilstrecke (32a) in Verbindung steht, daß dieser Steuerkammerabfluß (70f) durch die äußere Steuerung in einen Abflußbereitschaftszustand überführbar ist und daß der Steuerkammerabfluß (70f) in dem Abflußbereitschaftszustand in Abhängigkeit von dem in der Hochdruckteilstrecke (32) herrschenden Druck öffenbar ist, wenn der Druck in der Hochdruckteilstrecke (32) einen vorbestimmten Wert unterschritten hat.

4. Absperrventileinrichtung nach Anspruch 2 oder 3, **dadurch gekennzeichnet, daß** in dem Steuerkammerabfluß (70f) ein Steuerkammerabflußventil (74,70c) mit einem Steuerkammerabflußventilsitz (70c) und einem in Richtung auf die Abflußstellung elastisch vorgespannten Steuerkammerabflußventilkörper (74) vorgesehen ist, welcher durch den in der Steuerkammer (80) herrschenden Druck und durch eine von der äußeren Steuerung abhängige Zusatzschließkraft (64,66) in Richtung auf eine Schließstellung beaufschlagbar ist, wobei der Abflußbereitschaftszustand durch Ausschalten der von der äußeren Steuerung abhängigen Zusatzschließkraft (64,66) herstellbar ist.

5. Absperrventileinrichtung nach Anspruch 4, **dadurch gekennzeichnet, daß** auf den Steuerkammerabflußventilkörper (74) ein Magnetanker (64) einwirkt, welcher die Zusatzschließkraft (64,66) auf den Steuerkammerabflußventilkörper (74) überträgt.

6. Absperrventileinrichtung nach Anspruch 5, **dadurch gekennzeichnet, daß** der Magnetanker (64) durch eine Magnetankervorspannfeder (66) im Sinne der Erzeugung der Zusatzschließkraft belastet ist und daß zur Aufhebung der Zusatzschließkraft eine Magnetspule (68) des Magnetankers (64) unter Strom setzbar ist.

7. Absperrventileinrichtung nach Anspruch 5 oder 6, **dadurch gekennzeichnet, daß** der Steuerkammerabflußventilkörper (74;174) von einer Tellerfeder gebildet ist, welche durch innere Vorspannung in Richtung auf Öffnung des Steuerkammerabflusses (70f;170f) vorgespannt und gleichzeitig dem in der Steuerkammer (80) herrschenden Druck und der Wirkung des Magnetankers (64;164) ausgesetzt ist.

8. Absperrventileinrichtung nach Anspruch 7, **dadurch gekennzeichnet, daß** die Tellerfeder (74;174) mit einem ersten Umfangsrand (74a;174a) auf einer Stützschulter (170g) einer Zwischenkörperbaugruppe (70,72;170;172) aufliegt oder eingespannt ist und mit einem zweiten Umfangsrand (74b;174b) gegen den Abflußventilsitz (70c;170c) andrückbar ist.

9. Absperrventileinrichtung nach einem der Ansprüche 4 bis 8, **dadurch gekennzeichnet, daß** der Steuerkammerabflußventilkörper (74;174) an einer Zwischenkörperbaugruppe (70,72;170,172) angebracht ist, welche durch den Druck in der Steuerkammer (80) dichtend gegen den Absperrventilkörper (56) andrückbar ist und bei Druckabbau in der Steuerkammer (80) von dem Absperrventilkörper (56) abhebbar ist unter Bildung eines zusätzlichen Steuerkammerabflusses (72a,56a) aus der Steuerkammer (80).

10. Absperrventileinrichtung nach Anspruch 9, **dadurch gekennzeichnet, daß** die Zwischenkörperbaugruppe (70,72;170,172) in einem Teil (62a) eines Absperrventilgehäuses oder in einem Teil (164e) des Magnetankers (164) dichtend geführt ist.

11. Absperrventileinrichtung nach Anspruch 9 oder 10, **dadurch gekennzeichnet, daß** die Zwischenkörperbaugruppe (70,72;170,172) aus einem den Steuerkammerabflußventilkörper (74;174) tragenden Trägerteil (70;170) und einem kugelgelenkig mit dem Trägerteil (70;170) in Eingriff stehenden Zusatzabflußventilkörper (72;172) gebildet ist, welcher zusammen mit einem an dem Absperrventilkörper (56) ausgebildeten Zusatzabflußventilsitz (56a) den zusätzlichen Steuerkammerabfluß (72a,56a) der Steuerkammer (80) bildet.

12. Absperrventileinrichtung nach einem der Ansprüche 4 - 6, **dadurch gekennzeichnet, daß** der Steuerkammerabflußventilsitz (272b) an einem Zusatzabflußventilkörper (272) ausgebildet ist, welcher zusammen mit einem an dem Absperrventilkörper (256) ausgebildeten Zusatzabflußventilsitz (256a) einen zusätzlichen Steuerkammerabfluß (272/256a) der Steuerkammer (280) bildet und daß zwischen dem Steuerkammerabflußventilkörper (270) und dem Zusatzabflußventilkörper (272) eine Schraubendruckfeder (290) angeordnet ist, welche den Steuerkammerabflußventilkörper (270) in Richtung des Abhebens von dem Steuerkammerabflußventilsitz (272b) des Zusatzabflußventilkörpers (272) vorspannt.

13. Absperrventileinrichtung nach Anspruch 12, **dadurch gekennzeichnet, daß** der Steuerkammerabflußventilkörper (270) in einer Ventilkörperführung (264e) eines Absperrventilgehäuses oder eines Magnetankers (264) dichtend geführt ist und daß der Steuerkammerabflußventilkörper (270) und der Zusatzabflußventilkörper (272) im Bereich des Steuerkammerabflußventilsitzes (272b) kugelgelenkig aneinander anliegen.

14. Absperrventileinrichtung nach einem der Ansprüche 4 - 6, **dadurch gekennzeichnet, daß** der Steuerkammerabflußventilsitz (356a;456a;556a;656a) an dem Absperrventilkörper (356;456;556;656) ausgebildet ist und daß zwischen dem Steuerkammerabflußventilkörper (370;470;570;670) und dem Absperrventilkörper (356;456;556;656) eine Schraubendruckfeder (390;490; 590;690) vorgesehen ist, welche den Steuerkammerabflußventilkörper (370;470;570;670) in Richtung des Abhebens von dem Steuerkammerabflußventilsitz (356a; 456a;556a;656a) des Absperrventilkörpers (356;456; 556;656) vorspannt.

15. Absperrventileinrichtung nach Anspruch 14, **dadurch gekennzeichnet, daß** der Steuerkammerabflußventilkörper (370;470;570;670) taumelfähig oder kugelgelenkig in einer Ventilkörperführung eines Absperrventilgehäuses oder eines Magnetankers (364;464;564;664) dichtend geführt ist.

16. Absperrventileinrichtung nach einem der Ansprüche 14 oder 15, **dadurch gekennzeichnet, daß** der Steuerkammerabflußventilkörper (570;670) zumindest im Bereich des Steuerkammerabflußventilsitzes (556a;656a) sphärisch ausgebildet ist.

## Claims

1. Stop valve device (36) between two sections (32, 32a) of a fluid connection connecting two fluid chambers (30b, 28) of a vibration damper (10), in which the stop valve device (36) is provided with at least one stop valve (56, 54) separating a high pressure section (32) and a low pressure section (32a), the stop valve being provided with a stop valve body (56), and in which the stop valve body (56) can be adjusted between a shut-off position and an open position by an external control, **characterised in that** the stop valve (56, 54) can be transferred into a ready-to-open state by the external control and the stop valve (56, 54), after having been transferred into the ready-to-open state, can be opened in depencency on the pressure prevailing in the high pressure section (32), if pressure (P) has fallen below a predetermined value (P_{G}).

2. Stop valve device (36) according to claim 1, **characterised in that** a side (56c) of the stop valve body (56) apart from the high pressure section (32) can be loaded adjacent to a control chamber (80) by the fluid pressure in this control chamber (80), that, furthermore, the control chamber (80) is connected to the high pressure section (32) via a throttling section (56d) bridging the stop valve body (56), that, furthermore, the control chamber (80) is connected to the low pressure section (32a) via a control chamber outlet (70f), that this control chamber outlet (70f) can be transferred into a ready-to-discharge state by the external control and that the control chamber outlet (70f) can be opened in the ready-to-discharge state in dependency on the pressure prevailing in the high pressure section (32), if the pressure in the high pressure section (32) has fallen below a predetermined value.

3. Stop valve device (36) according to claim 1, **characterised in that** a first side (56b) of the stop valve body (56) loaded by the high pressure section (32) can be pressed elastically against a stop valve seat (54), that, furthermore, a second side (56c) of the stop valve body (56) apart from the first side can be loaded adjacent to a control chamber (80) by the fluid pressure in this control chamber (80), that, furthermore, the control chamber (80) is connected to the high pressure section (32) via a throttling section (56d) bridging the stop valve body (56), that, furthermore, the control chamber (80) is connected to the low pressure section (32a) via a control chamber outlet (70f), that this control chamber outlet (70f) can be transferred into a ready-to-discharge state by the external control and that the control chamber outlet (70f) can be opened in the ready-to-discharge state in dependency on the pressure prevailing in the high pressure section (32), if the pressure in the high pressure section (32) has fallen below a predetermined value.

4. Stop valve device according to claim 2 or 3, **characterised in that** a control chamber outlet valve (74, 70c) with a control chamber outlet valve seat (70c) and a control chamber outlet valve body (74) elastically biased in the direction of the outlet position is provided in the control chamber outlet (70f), which control chamber outlet valve body can be loaded by the pressure in the control chamber (80) and by an additional closing force (64, 66) dependent on the external control in the direction of a closing position, whereby the ready-to-discharge state can be brought about by cutting off the additional closing force (64, 66) dependent on the external control.

5. Stop valve device according to claim 4, **characterised in that** a magnet armature (64) influences the control chamber outlet valve body (74), which magnet armature transfers the additional closing force (64, 66) to the control chamber outlet valve body (74).

6. Stop valve device according to claim 5, **characterised in that** the magnet armature (64) is loaded by a magnet armature biassing spring (66) in order to produce the additional closing force and that to neutralise the additional closing force a magnetic coil (68) of the magnet armature (64) can be made live.

7. Stop valve device according to claim 5 or 6, **characterised in that** the control chamber outlet valve body (74; 174) is formed by a disc spring which is loaded by internal biassing in direction for opening the control chamber outlet (70f; 170f) and at the same time is subjected to the pressure prevailing in the control chamber (80) and to the effect of the magnet armature (64; 164).

8. Stop valve device according to claim 7**, characterized in that** the disc spring (74; 174) rests or is clamped with a first peripheral edge (74a; 174a) on a support shoulder (170g) of an interbody assembly (70, 72; 170; 172) and can be pressed against the outlet valve seat (70c; 170c) with a second peripheral edge (74b; 174b).

9. Stop valve device according to one of claims 4 to 8, **characterized in that** the control chamber outlet valve body (74; 174) is mounted on an interbody assembly (70, 72; 170, 172) which can sealingly be pressed against the stop valve body (56) by the pressure in the control chamber (80) and can be lifted from the stop valve body (56) on reduction of pressure in the control chamber (80) forming an additional control chamber outlet (72a, 56a) from the control chamber (80).

10. Stop valve device according to claim 9, **characterised in that** the interbody assembly (70, 72; 170, 172) is sealingly guided in a part (62a) of a stop valve casing or in a part (164e) of the magnet armature (164).

11. Stop valve device according to claim 9 or 10, **characterised in that** the interbody assembly (70, 72; 170, 172) is formed by a support member (70; 170) supporting the control chamber outlet valve body (74; 174) and an additional outlet valve body (72; 172) engaged with the support member (70; 170) in a spherical joint, which additional outlet valve body together with an additional outlet valve seat (56a) formed on the stop valve body (56) forms the additional control chamber outlet (72a, 56a) of the control chamber (80).

12. Stop valve device accord ng to one of claims 4 to 6 **characterised in that** the control chamber outlet valve seat (272b) is formed on an additional outlet valve body (272) which together with an additional outlet valve seat (256a) formed on the stop valve body (256) forms an additional control chamber outlet (272, 256a) of the control chamber (280) and that a coil compression spring (290) is arranged between the control chamber outlet valve body (270) and the additional outlet valve body (272) which loads the control chamber outlet valve body (270) in a direction of lifting it from the control chamber outlet valve seat (272b) of the additional outlet valve body (272).

13. Stop valve device according to claim 12, **characterised in that** the control chamber outlet valve body (270) is sealingly guided in a valve body guide (264e) of a stop valve casing or of a magnet armature (264) and that the control chamber outlet valve body (270) and the additional outlet valve body (272) bear against each other in the region of the control chamber outlet valve seat (272b) in a spherical joint.

14. Stop valve device according to one of claims 4 to 6, **characterised in that** the control chamber outlet valve seat (356a; 456a; 556a; 656a) is formed on the stop valve body (356; 456; 556; 656) and that a coil compression spring (390; 490; 590; 690) is provided between the control chamber outlet valve body (370; 470; 570; 670) and the stop valve body (356; 456; 556; 656) which loads the control chamber outlet valve body (370; 470; 570; 670) in a direction of lifting it from the control chamber outlet valve seat (356a; 456a; 556a; 656a) of the stop valve body (356; 456; 556; 656).

15. Stop valve device according to claim 14, **characterised in that** the control chamber outlet valve body (370; 470; 570; 670) is sealingly guided able to wobble or with spherical joint in a valve body guide of a stop valve casing or of a magnet armature (364; 464; 564; 664).

16. Stop valve device according to one of claims 14 or 15, **characterised in that** the control chamber outlet valve body (570; 670) has a spherical form at least in the region of the control chamber outlet valve seat (556a; 656a).

## Revendications

1. Dispositif à soupape d'arrêt (36) entre deux parcours partiels (32, 32a) d'une liaison à fluide, qui fait communiquer entre elles deux chambres à fluide (30b, 28) d'un amortisseur d'oscillations (10), le dispositif à soupape d'arrêt (36) comportant au moins une soupape d'arrêt (56, 54) séparant un parcours partiel haute pression (32) et un parcours partiel basse pression (32a) et cette soupape d'arrêt étant conçue avec un corps (56) de soupape d'arrêt et le corps (56) de la soupape d'arrêt étant déplaçable par une commande extérieure, entre une position d'arrêt et une position d'ouverture, **caractérisé** en ce que la soupape d'arrêt (56, 54) peut passer, sous l'effet de la commande extérieure, dans un état de préparation à l'ouverture et en ce que la soupape d'arrêt (56, 54), après passage dans l'état de préparation à l'ouverture, peut être ouverte en fonction de la pression régnant dans le parcours partiel haute pression (32), lorsque la pression (P) est passée au-dessous d'une valeur (P_{G}) prédéterminée.

2. Dispositif à soupape d'arrêt (36) selon la revendication 1, **caractérisé** en ce qu'un côté (56c) du corps (56) de la soupape d'arrêt, éloigné du parcours partiel haute pression (32), adjacent à une chambre de commande (80), peut être soumis à la pression du fluide dans cette chambre de commande (80), en ce qu'en outre la chambre de commande (80) est raccordée, par un parcours d'étranglement (56d) pontant le corps (56) de la soupape d'arrêt, au parcours partiel haute pression (32), en ce qu'en outre la chambre de commande (80) communique, par un écoulement (70f) de la chambre de commande, avec le parcours partiel basse pression (32a), en ce que cet écoulement (70f) de la chambre de commande peut passer, sous l'effet de la commande extérieure, dans un état de préparation à l'écoulement et en ce que l'écoulement (70f) de la chambre de commande peut être ouvert dans l'état de préparation à l'écoulement en fonction de la pression régnant dans le parcours partiel haute pression (32), lorsque la pression dans le parcours partiel haute pression (32) est passée au-dessous d'une valeur prédéterminée.

3. Dispositif à soupape d'arrêt (36) selon la revendication 1, **caractérisé** en ce qu'un premier côté (56b) du corps (56) de la soupape d'arrêt, exposé au parcours partiel haute pression (32), peut être élastiquement pressé contre un siège (54) de soupape d'arrêt, en ce qu'en outre un second côté (56c) du corps (56) de la soupape d'arrêt, éloigné de ce premier côté, adjacent à une chambre de commande (80), peut être soumis à la pression du fluide dans cette chambre de commande (80), en ce qu'en outre la chambre de commande (80) est raccordée, par un parcours d'étranglement (56d) pontant le corps (56) de la soupape d'arrêt, au parcours partiel haute pression (32) en ce qu'en outre la chambre de commande (80) communique, par un écoulement (70f) de la chambre de commande, avec le parcours partiel basse pression (32a), en ce que cet écoulement (70f) peut passer, sous l'effet de la commande extérieure, dans un état de préparation à l'écoulement et en ce que l'écoulement (70f) de la chambre de commande peut être ouvert dans l'état de préparation à l'écoulement, en fonction de la pression régnant dans le parcours partiel haute pression (32), lorsque la pression dans le parcours partiel haute pression (32) est passée au-dessous d'une valeur prédéterminée.

4. Dispositif à soupape d'arrêt selon la revendication 2 ou 3, **caractérisé** en ce qu'il est prévu dans l'écoulement (70f) de la chambre de commande une soupape d'écoulement (74, 70c) de la chambre de commande avec un siège (70c) de soupape d'écoulement de la chambre de commande et un corps (74) de soupape d'écoulement de la chambre de commande élastiquement précontraint en direction de la position d'écoulement, qui peut être sollicité en direction d'une position de fermeture par la pression régnant dans la chambre de commande (80) et par une force de fermeture supplémentaire (64, 66) dépendant de la commande extérieure, l'état de préparation à l'écoulement pouvant être réalisé par suppression de la force de fermeture supplémentaire (64, 66) dépendant de la commande extérieure.

5. Dispositif à soupape d'arrêt selon la revendication 4, **caractérisé** en ce qu'une armature magnétique (64) agit sur le corps (74) de la soupape d'écoulement de la chambre de commande, laquelle armature transmet la force de fermeture supplémentaire (64, 66) au corps (74) de la soupape d'écoulement de la chambre de commande.

6. Dispositif à soupape d'arrêt selon la revendication 5, **caractérisé** en ce que l'armature magnétique (64) est sollicitée par un ressort (66) de précontrainte de l'armature magnétique dans le sens de la production de la force de fermeture supplémentaire et en ce que pour supprimer la force de fermeture supplémentaire, une bobine magnétique (68) de l'armature magnétique (64) peut être mise sous tension.

7. Dispositif à soupape d'arrêt selon la revendication 5 ou 6, **caractérisé** en ce que le corps (74; 174) de la soupape d'écoulement de la chambre de commande est formé par un ressort Belleville, qui est précontraint par une précontrainte interne dans le sens de l'ouverture de l'écoulement (70f; 177f) de la chambre de commande et qui en même temps est soumis à la pression régnant dans la chambre de commande (80) et à l'effet de l'armature magnétique (64; 164).

8. Dispositif à soupape d'arrêt selon la revendication 7, **caractérisé** en ce que le ressort Belleville (74; 174) est appuyé ou est serré par un premier bord périphérique (74a; 174a) sur un épaulement d'appui (170g) d'un composant de corps intermédiaire (70, 72; 170, 172) et peut être pressé, par un second bord périphérique (74b; 174b), contre le siège (70c; 170c) de la soupape d'écoulement.

9. Dissositif à soupape d'arrêt selon l'une des revendications 4 à 8, **caractérisé** en ce que le corps (74; 174) de la soupape d'écoulement de la chambre de commande est placé sur un composant de corps intermédiaire (70, 72; 170, 172) qui peut être pressé de manière étanche contre le corps (56) de la soupape d'arrêt, par la pression régnant dans la chambre de commande (80), et qui, en cas de réduction de la pression dans la chambre de commande (80), peut être soulevé du corps (56) de la soupape d'arrêt en formant un écoulement supplémentaire (72a, 56a) de la chambre de commande (80).

10. Dispositif à soupape d'arrêt selon la revendication 9, **caractérisé** en ce que le composant de corps intermédiaire (70, 72; 170, 172) est guidé de manière étanche dans une partie (62a) d'un boîtier de soupape d'arrêt ou dans une partie (164e) de l'armature magnétique (164).

11. Dispositif à soupape d'arrêt selon la revendication 9 ou 10, **caractérisé** en ce que le composant de corps intermédiaire (70, 72; 170, 172) est formé par un élément de support (70; 170), portant le corps (74; 174) de la soupape d'écoulement de la chambre de commande et par un corps de soupape d'écoulement supplémentaire (72; 172), en prise par une articulation sphérique avec l'élément de support (70; 170), lequel corps de la soupape d'écoulement supplémentaire forme avec un siège de soupape d'écoulement supplémentaire (56a), formé sur le corps (56) de la soupape d'arrêt, l'écoulement supplémentaire (72a, 56a) de la chambre de commande (80).

12. Dispositif à soupape d'arrêt selon l'une des revendications 4 à 6, **caractérisé** en ce que le siège (272b) de la soupape d'écoulement de la chambre de commande est formé sur un corps (272) de soupape d'écoulement supplémentaire, lequel forme avec un siège (256a) de soupape d'écoulement supplémentaire formé sur le corps (256) de la soupape d'arrêt un écoulement supplémentaire (272/256a) de la chambre de commande (280) et en ce qu'entre le corps (270) de la soupape d'écoulement de la chambre de commande et le corps (272) de la soupape d'écoulement supplémentaire il est prévu un ressort de pression hélicoidal (290), qui précontraint le corps (270) de la soupape d'écoulement de la chambre de commande dans le sens du soulèvement par rapport au siège (272b) de la soupape d'écoulement de la chambre de commande, formé sur le corps (272) de la soupape d'écoulement supplémentaire.

13. Dispositif à soupape d'arrêt selon la revendication 12, **caractérisé** en ce que le corps (270) de la soupape d'écoulement de la chambre de commande est guidé de manière étanche dans un guidage de corps de soupape (264e) d'un boîtier de soupape d'arrêt ou d'une armature magnétique (264) et en ce que le corps (270) de la soupape d'écoulement de la chambre de commande et le corps (272) de la soupape d'écoulement supplémentaire s'appliquent l'un contre l'autre par une articulation sphérique, dans la zone du siège (272b) de la soupape d'écoulement de la chambre de commande.

14. Dispositif à soupape d'arrêt selon l'une des revendications 4 à 6, **caractérisé** en ce que le siège (356a; 456a; 556a; 656a) de la soupape d'écoulement de la chambre de commande est formé sur le corps (356; 456; 556; 656) de la soupape d'arrêt et en ce qu'entre le corps (370; 470; 570; 670) de la soupape d'écoulement de la chambre de commande et le corps (356; 456; 556; 656) de la soupape d'arrêt, il est prévu un ressort de pression hélicoïdal (390; 490; 590; 690), qui précontraint le corps (370; 470; 570; 670) de la soupape d'écoulement de la chambre de commande dans le sens du soulèvement par rapport au siège (356a; 456a; 556a; 656a) de la soupape d'écoulement de la chambre de commande, formé sur le corps (356; 456; 556; 656) de la soupape d'arrêt.

15. Dispositif à soupape d'arrêt selon la revendication 14, **caractérisé** en ce que le corps (370; 470; 570; 670) de la soupape d'écoulement de la chambre de commande est guidé de manière étanche de façon à pouvoir osciller ou à la manière d'une articulation sphérique dans un guidage de corps de soupape d'un boîtier de soupape d'arrêt ou d'une armature magnétique (364; 464; 564; 664).

16. Dispositif à soupape d'arrêt selon l'une des revendications 14 ou 15, **caractérisé** en ce que le corps (570; 670) de la soupape d'écoulement de la chambre de commande est sphérique au moins dans la zone du siège (556a; 656a) de la soupape d'écoulement de la chambre de commande.
